# EUROPEAN PATENT SPECIFICATION

(11) **EP 4 337 600 B1**
(45) Date of publication and mention of the grant of the patent: **06.08.2025**
(21) Application number: 21745866.0
(22) Date of filing: 18.06.2021
(51) Int. Cl.: C01B 3/04, B01D 53/047, B01D 53/22, C01B 3/56, F25B 1/10

(54) **AMMONIA CRACKING PROCESS**
AMMONIAK-CRACKVERFAHREN
PROCÉDÉ DE CRAQUAGE D'AMMONIAC

(43) Date of publication of application: 20.03.2024
(73) Proprietor: Air Products and Chemicals, Inc., Allentown, PA 18106 (US)
(72) Inventor: SHAW, Andrew, Allentown, PA 18195 (US); SALOWAY, Simon, Craig, Allentown, PA 18195 (US); WHITE, Vincent, Allentown, PA 18195 (US)
(74) Representative: Beck Greener LLP
(86) International application number: PCT/US2021/038000
(87) International publication number: WO 2022/265650

(56) References cited:
- WO-A1-2020/095467
- CN-A- 111 957 270
- US-A1- 2012 167 840

## Description

### BACKGROUND

Global interest in renewable energy and using this renewable energy to generate green hydrogen has driven the interest in converting the green hydrogen to green ammonia, as ammonia is simpler to transport over distance of hundreds or thousands of miles. Particularly, shipping liquid hydrogen is not commercially possible currently but shipping ammonia, which is in a liquid state, is currently practiced.

For use in a commercial fuel cell, the ammonia must be converted back to hydrogen according to the reaction.

2*NH*₃ 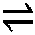

3*H*₂ + *N*₂

This is an endothermic process, *i.e.,* a process that requires heat, and is performed over a catalyst. This process is known as cracking. The gas produced (or "cracked gas") is a combination of hydrogen (H₂) and nitrogen (N₂). Since the cracking reaction is an equilibrium reaction, there is also some residual ammonia. In most applications of crackers currently, the hydrogen + nitrogen mixture is utilised as is. However, as ammonia can be a poison to fuel cells, this stream, with ammonia suitably removed such as by scrubbing with water, can be used directly in a fuel cell. However, if the hydrogen is to be used in vehicle fueling, the nitrogen present provides a penalty to the process. The fuel to a vehicle fueling system is compressed to significant pressure - up to 900 bar. This means that the nitrogen, which is merely a diluent in the process, is also compressed, taking power, and taking storage volume and increasing anode gas purge requirement, decreasing efficiency. It is therefore beneficial where hydrogen is to be used in vehicle fueling, for the hydrogen + nitrogen to be purified.

Small scale cracking reactors, or "crackers", typically use pressure swing adsorption ("PSA") devices to separate the cracked gas and recover the hydrogen and generate a PSA tail gas (or offgas). However, these crackers are generally heated electrically and the PSA tail gas is typically vented to atmosphere.

As is common in hydrogen production from a steam methane reforming (SMR) reactor, a PSA can be used to purify the nitrogen + hydrogen. The cracking reaction is performed in tubes packed with catalyst which are externally heated by a furnace (see GB1142941).

GB1142941 discloses a process for making town gas from ammonia. The ammonia is cracked and the cracked gas scrubbed with water to remove residual ammonia. The purified hydrogen/nitrogen mixture is then enriched with propane and/or butane vapor to produce the town gas for distribution.

US6835360A discloses an endothermic catalytic reaction apparatus for converting hydrocarbon feedstock and methanol to useful gases, such as hydrogen and carbon monoxide. The apparatus comprises a tubular endothermic catalytic reactor in combination with a radiant combustion chamber. The resultant cracked gas is used directly in a fuel cell after passing through a gas conditioning system.

GB977830A discloses a process for cracking ammonia to produce hydrogen. In this process, the hydrogen is separated from the nitrogen by passing the cracked gas through a bed of molecular sieves which adsorbs nitrogen. The nitrogen is then driven off the bed and may be stored in a holder.

JP5330802A discloses an ammonia cracking process in which the ammonia is contacted with an ammonia decomposition catalyst at a pressure of 10 kg/cm² (or about 9.8 bar) and a temperature of 300 to 700°C. Hydrogen is recovered from the cracked gas using a PSA device. The reference mentions that the desorbed nitrogen may be used to boost the upstream process but no details are provided.

US2007/178034A discloses a process in which a mixture of ammonia and hydrocarbon feedstock is passed through a fired steam reformer at 600°C and 3.2 MPa (or about 32 bar) where it is converted into a synthesis gas containing about 70 vol. % hydrogen. The synthesis gas is enriched in hydrogen in a shift reaction, cooled and condensate removed. The resultant gas is fed to a PSA system to generate a purified hydrogen product having 99 vol. % hydrogen or more. The offgas from the PSA system is fed as fuel to the fired steam reformer.

CN111957270A discloses a process in which ammonia is cracked in a tubular reactor within a furnace. The cracked gas is separated by adsorption to produce hydrogen gas and a nitrogen-rich offgas. The fuel demand of the furnace appears to be satisfied using a combination of cracked gas, hydrogen product gas and/or offgas.

There is a need generally for improved processes for the production of hydrogen from ammonia and specifically for processes that are more efficient in terms of energy consumption and/or that have higher levels of hydrogen recovery and/or that reduce or eliminate the need to combust fossil fuels.

In the following discussion of embodiments of the present invention, the pressures given are absolute pressures unless otherwise stated.

### BRIEF SUMMARY OF THE INVENTION

According to a first aspect of the present invention, there is provided a method for producing hydrogen from ammonia, comprising:
pressurizing liquid ammonia;
heating (and optionally vaporizing) the liquid ammonia by heat exchange with one or more hot fluids to produce heated ammonia;
combusting a fuel in a furnace to heat a first set of catalyst-containing reactor tubes and to form a flue gas;
supplying the heated ammonia to the first set of catalyst-containing reactor tubes to cause cracking of ammonia into a first cracked gas containing hydrogen gas, nitrogen gas and residual ammonia; and
purifying the first cracked gas in a first PSA to produce a first hydrogen product gas and a first PSA tail gas; and

supplying the first PSA tail gas, or a gas derived therefrom, as feed to a secondary cracking reactor comprising a catalyst to cause cracking of ammonia into a second cracked gas containing hydrogen gas and nitrogen gas;
wherein the one or more hot fluids comprise the flue gas and/or the first cracked gas.

The liquid ammonia is typically pressurized to a pressure that is greater than 1.1 bar, e.g. at least 5 bar or at least 10 bar. In some embodiments, the liquid ammonia is pressurized to a pressure in a range from about 5 bar to about 50 bar, or in a range from about 10 to about 45 bar, or in a range from about 30 bar to about 40 bar.

The liquid ammonia is typically heated to produce heated ammonia at a temperature greater than about 250°C, *e.g.* in a range from about 350°C to about 800°C, or from about 400°C to about 600°C. At the pressures in question, the liquid ammonia is typically vaporized completely to form heated ammonia vapour.

The temperature is ultimately determined by the identity of the catalyst, the operating pressure and the desired "slip", *i.e.* the amount of ammonia that passes through the cracking reactor without being cracked. In this regard, the process is typically operated with no more than about 4% slip which would be the amount of slip if the cracking process were operated 5 bar and 350°C with a close approach to equilibrium. Problems may arise with some construction materials at any appreciable pressure at temperatures above about 700°C.

The first cracking reaction takes place in a first set of catalyst-filled reactor tubes that are heated by a furnace. However, in theory any heterogeneously catalysed gas reactor could potentially be used for the conversion.

There are a large number of catalysts known in the art as useful for the ammonia cracking reaction and any of these conventional catalysts may be used in this invention.

The primary fuel for the furnace typically comprises methane. The fuel may be pure methane but is more likely natural gas or biogas. In some embodiments, the primary fuel is natural gas or biogas which is supplemented with hydrogen as a secondary fuel, optionally in the form of an ammonia cracked gas. In these embodiments, liquid ammonia may be pumped and cracked to form the cracked gas which is added to the primary fuel.

The first PSA device may operate a PSA cycle or a vacuum swing adsorption (VSA) cycle. A TSA device may be used in combination with the first PSA device, the TSA device to remove ammonia (see US10787367) and the first PSA device to remove nitrogen and produce the hydrogen product. Suitable PSA cycles include any of the cycles disclosed in US9381460, US6379431 and US8778051, the disclosures of which are incorporated herein by reference.

Typically, the secondary cracking reactor operates at a temperature in the range from about 250°C to about 700°C, e.g. in a range from about 300°C to about 700°C or in a range from about 400 °C to about 600 °C. Thus, the feed to the secondary cracking reactor must typically be heated prior to being fed to the reactor. In preferred embodiments, the feed to the secondary cracking reactor is heated by heat exchange with the second cracked gas and/or with the flue gas. For example, the secondary cracking reaction and the heating of the feed to the reaction could be performed in a single "heat-exchanger reactor".

The secondary cracking reactor may operate at a pressure from about 1.5 bar to about 50 bar e.g., from about 1.5 bar to about 40 bar. Typically, the secondary cracking reactor operates at a pressure from about 2 bar to about 15 bar, preferably from about 10 bar to about 12 bar, more preferably about 11 bar or about 12 bar. In other embodiments, the secondary cracking reactor operates at a pressure from about 2 bar to about 5 bar, preferably about 4 bar. Thus, the feed to the secondary cracking reactor may have to be compressed to the operating pressure of the secondary cracking reactor prior to being fed to the reactor. The first PSA tail gas may be supplied to the secondary cracking reactor without compression.

In some embodiments, the first PSA tail gas is compressed prior to being fed to the secondary cracking reactor. In this regard, the method may comprise compressing the first PSA tail gas in a multistage compressor comprising at least two stages, said process comprising taking the feed to the secondary cracker from an interstage of the compressor and supplying the second cracked gas back to the interstage of the compressor for further compression.

Hydrogen may be recovered from the second cracked gas. Recovery may be achieved by purifying the second cracked gas in a second PSA to produce a second hydrogen product gas and a second PSA tail gas. The second hydrogen product gas may be combined with the first hydrogen product gas to form a combined hydrogen product gas. Additionally or alternatively, the fuel combusted in the furnace may comprises the second PSA tail gas.

In some embodiments, first PSA tail gas is purified in a second PSA to produce a second hydrogen product gas and a second PSA tail gas. The second PSA tail gas may be supplied as the feed to the secondary cracking reactor. Optionally, the fuel combusted in the furnace comprises the second cracked gas.

The second PSA device may operate a PSA cycle or a vacuum swing adsorption (VSA) cycle. A TSA device may be used in combination with the second PSA device, the TSA device to remove ammonia and the second PSA device to remove nitrogen and produce the hydrogen product. Suitable PSA cycles include any of the cycles disclosed in US9381460, US6379431 and US8778051.

In other embodiments, the method comprises separating the first PSA tail using a membrane separator. Like hydrogen, ammonia is a "fast gas" that readily permeates across membranes used for gas separation. In these embodiments, the method may comprise compressing the first PSA tail gas in a first compressor to produce compressed first PSA tail gas and separating the compressed first PSA tail gas using a membrane separator to produce a hydrogen-rich permeate gas comprising ammonia, and a nitrogen-rich retentate gas wherein the permeate gas is supplied as the feed to the secondary cracking reactor.

The permeate gas may also be compressed in a second compressor before being supplied as the feed to the secondary cracking reactor.

Recycling the hydrogen-rich permeate gas for further processing in the PSA device (or, for simplicity, the "PSA") improves hydrogen recovery significantly and recovery rates may approach 100%, *e.g.* may be about 99%.

The process may comprise taking the feed to the secondary cracker from an interstage of a multistage compressor comprising at least two stages, and supplying the second cracked gas to the interstage of the compressor for further compression.

Typically, hydrogen is recovered from the second cracked gas in the method utilizing a membrane separator. Optionally, the hydrogen is recovered from the second cracked gas by purifying the second cracked gas with the first cracked gas in the first PSA.

According to a second aspect of the present invention, there is provided an apparatus for producing hydrogen from ammonia, comprising:
a pump for pressurizing liquid ammonia;
at least one heat exchanger in fluid communication with the pump for heating (and optionally vaporizing) the liquid ammonia from the pump by heat exchange with one or more hot fluids;
a first set of catalyst-containing reactor tubes in fluid communication with the heat exchanger(s), for cracking heated ammonia from the heat exchanger(s) to produce a first cracked gas containing hydrogen gas, nitrogen gas and residual ammonia;
a furnace in thermal communication with the first set of catalyst-containing reactor tubes for combustion of a fuel to heat the first set of catalyst-containing reactor tubes and to form a flue gas;
a first PSA device in fluid communication with the first set of catalyst-containing reactor tubes for purifying the first cracked gas to produce a first hydrogen product gas and a first PSA tail gas;
a secondary cracking reactor comprising a catalyst for cracking the first PSA tail gas, or a gas derived therefrom, to produce a second cracked gas comprising hydrogen gas and nitrogen gas; and
a second PSA device for recovering hydrogen from the second cracked gas or the first PSA tail gas to produce a second hydrogen product gas and a second PSA tail gas,
wherein the apparatus comprises a flue gas conduit for feeding the flue gas as a hot fluid from the furnace to the heat exchanger(s) and/or a cracked gas conduit for feeding the first cracked gas as a hot fluid from the first set of catalyst-containing reactor tubes to the heat exchanger(s).

The furnace may be separate from the catalyst-filled reactor tubes although the furnace and the catalyst-filled reactor tubes are preferably integrated within the same unit. In preferred embodiments, a steam methane reforming (SMR) type reactor is used in which the furnace comprises a radiant section through which pass the catalyst-containing reactor tubes.

The apparatus may comprise a compressor for compressing the first PSA tail gas upstream of the secondary cracking reactor.

Alternatively, the apparatus may comprise a multistage compressor comprising a first stage for compressing the first PSA tail gas upstream of the secondary cracking reactor and a second stage for compressing the second cracked gas downstream of the secondary cracking reactor.

The second PSA device may be downstream of the compressor and upstream of the secondary cracking reactor.

The apparatus may comprise a compressor for compressing the second cracked gas upstream of the second PSA device.

Typically, the apparatus also comprises a first economizer for heating the PSA tail gas feed to the secondary heat cracking reactor by heat exchange with the second cracked gas. Additionally or alternatively, the apparatus typically comprises a second economizer for heating the PSA tail gas feed to the secondary cracking reactor by heat exchange with the flue gas.

According to a third aspect of the present invention, there is provided an apparatus for producing hydrogen from ammonia, comprising:
a pump for pressurizing liquid ammonia;
at least one heat exchanger in fluid communication with the pump for heating (and optionally vaporizing) the liquid ammonia from the pump by heat exchange with one or more hot fluids;
a first set of catalyst-containing reactor tubes in fluid communication with the heat exchanger(s), for cracking heated ammonia from the heat exchanger(s) to produce a first cracked gas containing hydrogen gas, nitrogen gas and residual ammonia;
a furnace in thermal communication with the first set of catalyst-containing reactor tubes for combustion of a fuel to heat the first set of catalyst-containing reactor tubes and to form a flue gas;
a first PSA device in fluid communication with the first set of catalyst-containing reactor tubes for purifying the first cracked gas to produce a hydrogen product gas and a first PSA tail gas;
a secondary cracking reactor comprising a catalyst for cracking the first PSA tail gas, or a gas derived therefrom, to produce a second cracked gas comprising hydrogen gas and nitrogen gas; and

a membrane separator for separating the first PSA tail gas to produce a nitrogen-rich retentate gas, and a hydrogen-rich permeate gas comprising ammonia for further processing in the secondary cracking reactor,
wherein the apparatus comprises a flue gas conduit for feeding the flue gas as a hot fluid from the furnace to the heat exchanger(s) and/or a cracked gas conduit for feeding the first cracked gas as a hot fluid from the first set of catalyst-containing reactor tubes to the heat exchanger(s).

The apparatus may comprise a first compressor to compress the first PSA tail gas before separation in the membrane separator. Optionally, the apparatus may comprise a second compressor for compressing the hydrogen-rich gas.

In some embodiments, the apparatus comprises a multistage compressor comprising a first stage for compressing the hydrogen-rich gas upstream of the secondary cracking reactor; and a second stage for compressing the second cracked gas downstream of the secondary cracking reactor.

In another embodiment the apparatus comprises a second compressor for compressing the second cracked gas.

Typically, the apparatus also comprises a first economizer for heating the PSA tail gas feed to the secondary heat cracking reactor by heat exchange with the second cracked gas. Additionally or alternatively, the apparatus typically comprises a second economizer for heating the PSA tail gas feed to the secondary cracking reactor by heat exchange with the flue gas.

### BRIEF DESCRIPTION OF THE DRAWINGS

Fig. 1 is a process flow diagram of a first reference example of an ammonia cracking process to produce hydrogen;
Fig. 2 is a process flow diagram of another reference example based on the ammonia cracking process of Fig. 1 in which no hydrogen product is used as fuel;
Fig. 3 is a process flow diagram of a further reference example based on the ammonia cracking process of Figs. 1 & 2 in which only PSA tail gas is used as fuel;
Fig. 4 is a process flow diagram of a fourth reference example of an ammonia cracking process to produce hydrogen utilizing a membrane separator;
Fig. 5 is a process flow diagram of a fifth reference example of an ammonia cracking process to produce hydrogen utilizing two PSA devices;
Fig. 6 is a process flow diagram of a first embodiment of an ammonia cracking process to produce hydrogen according to the present invention;
Fig. 7 is a process flow diagram showing a first alternative arrangement of the ammonia cracking process depicted in Fig. 6;
Fig. 8 is a process flow diagram showing a second alternative arrangement of the ammonia cracking process depicted in Fig. 6;
Fig. 9 is a process flow diagram showing a third alternative arrangement of the ammonia cracking process depicted in Fig. 6;
Fig. 10 is a process flow diagram of a second embodiment of an ammonia cracking process to produce hydrogen according to the present invention;
Fig. 11 is a process flow diagram showing a first alternative arrangement of the ammonia cracking process depicted in Fig. 10; and
Fig. 12 is a process flow diagram showing a second alternative arrangement of the ammonia cracking process depicted in Fig. 10.

### DETAILED DESCRIPTION

A process is described herein for producing hydrogen by cracking ammonia. The process has particular application to producing so-called "green" hydrogen which is hydrogen created using renewable energy instead of fossil fuels. In this case, the ammonia is typically produced by electrolyzing water using electricity generated from renewable energy, such as wind and/or solar energy, to produce hydrogen which is then reacted catalytically with nitrogen (Haber process) to produce the ammonia which is more easily transported than hydrogen. After reaching its destination, the ammonia is then cracked to regenerate the hydrogen.

In this inventive process, the heat required for the reaction is typically provided by combustion of PSA tail gas (which usually contains some amount of residual hydrogen and ammonia) in the furnace. If the PSA tail-gas has insufficient heating value than either vaporised ammonia, a portion of the product hydrogen, or an alternative fuel may be used with the tail-gas as a trim fuel.

In practice, natural gas could be used as a trim fuel, together with the PSA tail gas, as is practiced in SMRs for hydrogen. However, with the desire to maintain the "green" or renewable credentials of the hydrogen so produced, there is an incentive to use a "renewable fuel". This can be the cracked "renewable" ammonia, the ammonia itself, or another renewable energy source, such as biogas, or indeed electric heating whether the electricity is itself from a renewable source, in this case local to the cracking process as opposed to the renewable electricity used to generate the hydrogen which has been transported in the form of ammonia.

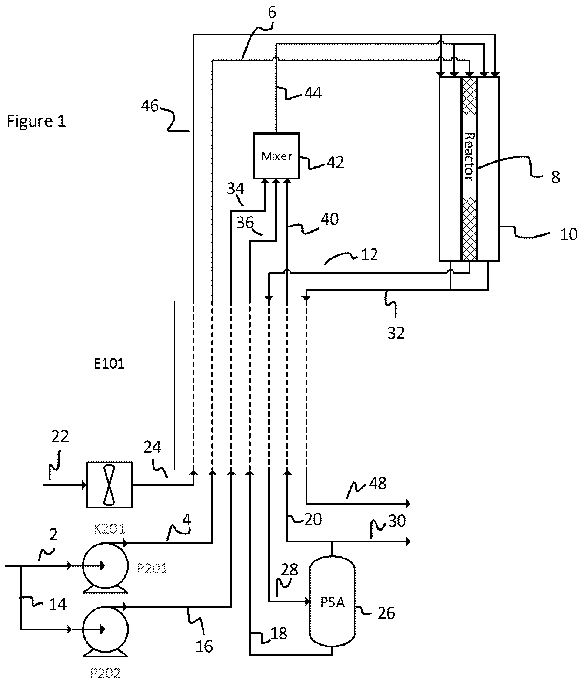

A reference example of the process is shown in Fig. 1. The process takes liquid ammonia from storage (not shown). The ammonia to be cracked (line 2) is pumped (pump P201) as liquid to a pressure greater than the desired cracking pressure (see GB1142941). The reaction pressure is a compromise between operating pressure and conversion according to Le Chatelier's principle. There is an incentive to operate the reactor (8) at higher pressure because pumping liquid ammonia requires less power and capital than compressing the product hydrogen.

The pressurised liquid ammonia (line 4) is then heated, vaporised (if it is below its critical pressure) and heated further, up to a temperature of greater than 250 °C via a heat exchanger (E101) using the heat available in the cracked gas leaving the reaction tubes and the flue gas from the furnace. In the figure, the heat exchanger (E101) is shown as one heat exchanger but, in practice, it will be a series of heat exchangers in a network.

The initial heating and vaporization of the pressurized liquid ammonia may alternatively take place against an alternative heat source, such as cooling water or ambient air. Typical reaction temperatures are greater than 500 °C (see US2601221), palladium-based systems can run at 600 °C and 10 bar, whereas RenCat's metal oxide-based system runs at less than 300 °C and 1 bar. (See https://www.ammoniaenergy.org/articles/ammonia-cracking-to-high-purity-hydrogen-for-pem-fuel-cells-in-denmark/). The operating pressure of the cracker is typically an optimization of several factors. Cracking of ammonia into hydrogen and nitrogen is favored by low pressure but other factors favor higher pressure, such as power consumption (which is minimized by pumping the feed ammonia rather than compressing the product hydrogen), and the PSA size (which is smaller at higher pressure).

The hot ammonia (line 6) enters reaction tubes of a reactor (8) at the desired pressure where additional heat is provided by the furnace (10) to crack the ammonia into nitrogen and hydrogen. The resulting mixture of residual ammonia, hydrogen and nitrogen exits (line 12) the reaction tubes (8) at the reaction temperature and pressure. The reaction products are cooled in a heat exchanger (E101) against a combination of feed ammonia (from line 4), furnace fuel (in this case pumped ammonia from line 14, pump P202 and line 16; PSA tail gas from line 18; and product hydrogen to be used as fuel in line 20) and combustion air (from line 22, fan K201 and line 24) to reduce the temperature as close as possible to that required for the inlet of a PSA device (26). Any residual heat in the cracked gas mixture (line 28) is removed in a water cooler (not shown) to achieve an inlet temperature to the PSA device (26) of in a range from about 20°C to about 60°C, *e.g*. about 50°C.

The PSA product (line 30) is pure hydrogen compliant with ISO standard 14687 - Hydrogen Fuel Quality - with residual ammonia < 0.1 ppmv and nitrogen < 300 ppmv - at approximately the reaction pressure. The product hydrogen (line 30) is further compressed (not shown) for filling into tube trailers (not shown) for transport or it may be liquefied in a hydrogen liquefier (not shown) after any required compression. The PSA tail gas (line 18) or "purge gas" from the PSA device (26) is shown as being heated via the heat exchanger E101, using the cracked gas (line 12) leaving the reaction tubes or furnace flue gas (line 32), before being sent (in line 34) to the furnace as a combustion fuel. However, the PSA tail gas (line 18) may be fed directly to the furnace (10) without heating.

The resultant warmed ammonia fuel (line 36) and warmed hydrogen (line 40) are depicted as combined with the (optionally) warmed PSA tail gas (line 38) in a mixer (42) to produce a combined fuel which is fed (line 44) to the furnace (10) for combustion to generate the flue gas (line 32 and, after cooling in E101, line 48). However, it should be noted that one or more of the fuels could be fed directly to the furnace without prior mixing. The warmed air (for combustion of the fuel) is fed to the furnace (10) in line 46.

One of the aims of preferred embodiments of the present process is to maximise the amount of hydrogen generated by cracking the renewable ammonia. That means minimising the amount of hydrogen used as fuel, or ammonia if ammonia were to be used as a fuel directly. Therefore, heat integration is important so as to use the hot flue gas and cracked gas appropriately, for instance to preheat air (line 24) and ammonia (line 4) to the cracker as this reduces the amount of "fuel" to be used in the burners of the furnace (10). This leads to higher hydrogen recovery as less of the hydrogen is lost in the furnace flue gas (lines 32 & 48) as water. Therefore, steam generation, for instance, should be minimised in favour of intra-process heat integration.

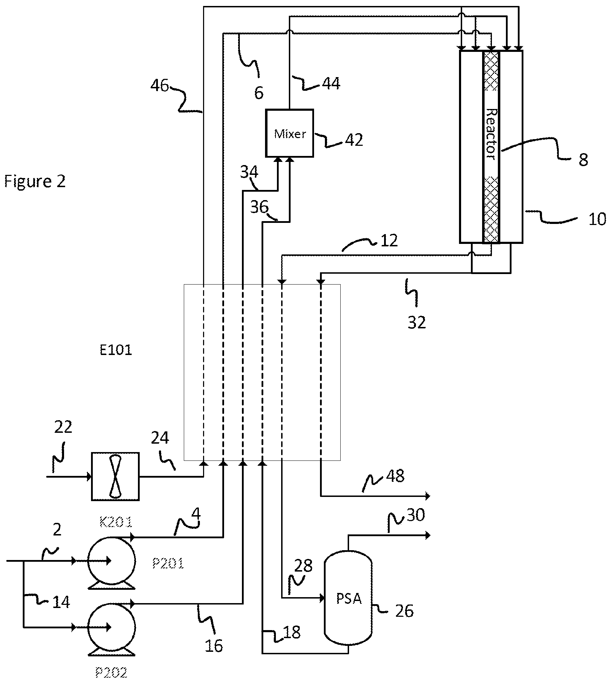

Fig. 1 shows ammonia provided as fuel (lines 34 & 44) and feed (line 6) and it also shows product hydrogen as fuel (lines 40 & 44) - in practice, it is likely only one of these streams would be used as fuel. In this regard, Fig. 2 depicts a similar process to that of Fig. 1 in which ammonia is used as a fuel (line 34) but not product hydrogen. All other features of the process depicted in Fig. 2 are the same as in Fig. 1 and the common features have been given the same reference numerals.

The inventors are aware that stable combustion of ammonia is facilitated if hydrogen is also used as a fuel, particularly at start-up and warm-up.

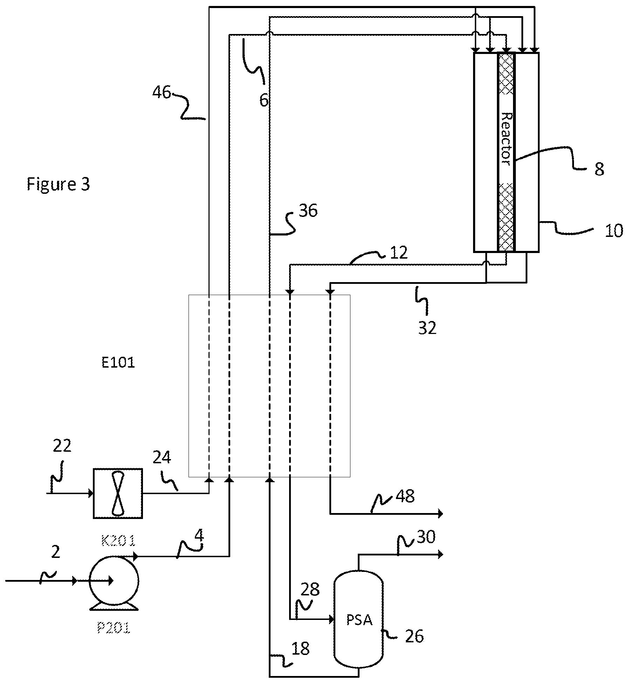

Fig. 3 depicts a process similar to that depicted in Fig. 2. In this process, the recovery of hydrogen (line 30) from the PSA may be adjusted to provide a tail gas (line 18) which, when burned, will provide all the heat required by the process, thus eliminating the need for a trim fuel. All other features of the process depicted in Fig. 3 are the same as in Fig. 1 and the common features have been given the same reference numerals.

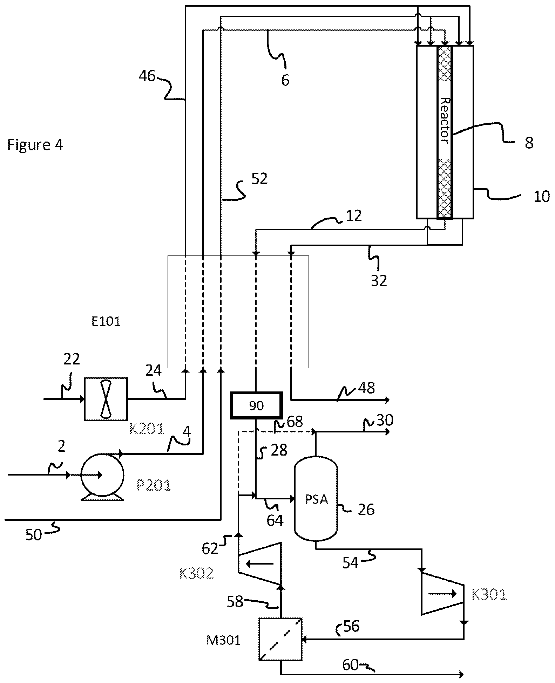

Should there be a viable alternative source of renewable energy for the cracking reactions, as discussed above, one could consider recovering hydrogen from the PSA tail gas to increase the net hydrogen production from the process in addition to the hydrogen produced from the PSA. Such a process could use membranes, which have a selective layer that is readily permeable to hydrogen but relatively impermeable to nitrogen, to separate hydrogen from the nitrogen rich PSA tail gas stream (Fig. 4).

Ammonia may need to be removed particularly but not exclusively if membranes are being used as part of the separation process since membrane material can be intolerant of high concentrations of ammonia and ammonia is a fast gas and would permeate with the hydrogen so would accumulate in the process if not removed. Ammonia may be removed for instance by a water wash or other well-known technology for ammonia removal, upstream of the membrane. Ammonia may be recovered from an aqueous ammonia solution generated in the water wash using a stripping column and the recovered ammonia could be recycled to the feed to the cracking reactor. This could theoretically increase the hydrogen recovery from the process up to 100%. Recovering ammonia from the cracked gas simplifies the hydrogen purification steps, may increase the recovery of hydrogen from the ammonia if the separated ammonia is recovered as feed, and also removes ammonia from the feed to the burners, eliminating concerns over production of NOₓ caused by burning ammonia.

Water may also need to be removed from the feed ammonia to prevent damage to the ammonia cracking catalyst. Typically ammonia has small quantities of water added to it to prevent stress corrosion cracking in vessels during shipping and storage. This might need to be removed. However, the water removal can be incorporated into the stripping column mentioned above. The ammonia would be evaporated at the required pressure, taking care in the design of the evaporator to ensure that the water was also carried through to the stripping column with the evaporator ammonia. This mostly vapor phase ammonia enters a mid-point of the column and pure ammonia leaves through the top of the column. The column has a partial condenser (condenses only enough liquid for the reflux) and the overhead vapor contains the feed ammonia (free of water) plus the ammonia recovered from the cracker gas stream.

It may be more energy efficient to feed the cracked gas first to a membrane to produce a hydrogen-enriched permeate stream and a nitrogen-rich retentate stream that could be vented. The hydrogen-enriched permeate can be further purified in the PSA. A second membrane could be added to the PSA tail gas stream to further boost the overall hydrogen recovery. This configuration would greatly reduce the tail-gas compressor size.

The use of a membrane separator to increase hydrogen recovery allows the nitrogen to be vented from the process without passing through the combustion section of the process. In processes where the nitrogen stream is at pressure, it would be beneficial to expand the nitrogen to atmospheric pressure before venting to recover power through an expansion turbine. It would increase the amount of power recovered if the pressurized nitrogen were to be heated before expansion using heat available in the flue gas or cracked gas stream.

Fig. 4 depicts a process involving a membrane for recovering hydrogen from the PSA tail gas while eliminating nitrogen. The features of the process in Fig. 4 that are common to the processes of Figs. 1 to 3 have been given the same reference numerals. The following is a discussion of the new features in Fig. 4.

A fuel (line 50), possibly a "renewable" fuel but typically natural gas or biogas, is warmed in the heat exchange (E101) and fed (line 52) to the furnace (10) for combustion to heat the catalyst-filled tubes of the cracking reactor (8).

The cooled cracked gas (line 28) is combined with compressed hydrogen-rich permeate gas (line 62) to form a combined gas which is fed (line 64) to the PSA device (26). The combined gas is separated to form the hydrogen product (line 30). The tail gas (line 54) from the PSA is compressed in a first compressor (K301) and the compressed gas is fed (line 56) to a membrane separation unit (M301) to produce an enriched hydrogen permeate stream (line 58) and a nitrogen-rich retentate stream (line 60). The membrane separation unit can consist of multiple membrane devices arranged in parallel or series as determined by the feed flow and desired hydrogen recovery. The permeate stream is compressed in a second compressor (K302) to form the compressed hydrogen-rich gas (line 62) which is recycled (line 64) to the PSA (26) with the cooled cracked gas (line 28) to increase overall rate of recovery of hydrogen.

Assuming the purity of the hydrogen produced by the membrane is sufficiently high, part (line 68) of the hydrogen permeate gas may be combined after compression with the hydrogen product (line 30), with the remainder being recycled (line 64) to the PSA with the cooled cracked gas (line 28). Combining part of the hydrogen permeate gas with the hydrogen product in this way would reduce the required size of the PSA and the power of K301 and K302.

Alternatively, all of the compressed hydrogen-rich permeate gas (line 62) may be combined with the hydrogen product (line 30) with none being recycled to the PSA (26).

Fig 4 has a system (depicted as unit 90) for removing and recovering ammonia from the cracked gas. This system may involve a scrubber for removing the ammonia from the gas with water and a stripper for recovering ammonia from the water, or may involve a TSA device for removing ammonia by adsorption (see US10787367).

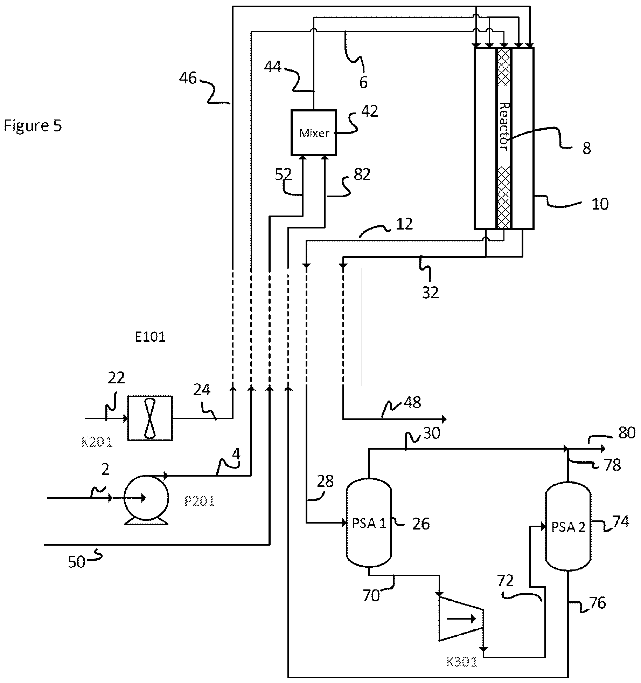

Alternatively, the tail gas from the first PSA may be compressed and fed to a second PSA to further recover hydrogen (Fig. 5), with the PSA tail gas from the second PSA being optionally used as part of the fuel for the cracking process. The second PSA maximises recovery of renewable hydrogen from renewable ammonia. The tail gas from the first PSA is compressed to a level so that the hydrogen from both PSAs are at the same elevated pressure.

Both PSAs have to be able to tolerate ammonia in the feed stream. The adsorbent in the PSA needs to be suitable for ammonia adsorption and desorption.

The second PSA tail gas pressure may be higher than first PSA tail gas pressure i.e., lower in the first PSA to maximise recovery and higher in the second PSA to allow for pressure drop in heat exchangers used to preferentially reheat PSA tail gas and feed to burners. Energy efficiency (Carbon Intensity) requirements of renewable fuels processes require efficient heat integration over what would normally be considered for a similar hydrogen production process. Optionally, low pressure from the PSA tail gas could be tolerated by using low pressure drop heat exchange or an intermediate heat exchange fluid.

If a low-carbon fuel cannot be found to use as fuel to the burners, a high hydrogen recovery process such as the two PSA process shown in Fig. 5 would have a high carbon intensity, partly associated with the fuel if that fuel was a non-renewable hydrocarbon *e.g*., natural gas, and the carbon dioxide (CO₂) emitted could not be considered as carbon dioxide from a renewable fuel. If lower hydrogen recovery could be tolerated, lower amounts of natural gas fuel would be required.

Fig. 5 depicts a process involving a second PSA for recovering hydrogen from a first PSA tail gas. The features of the process in Fig. 5 that are common to the processes of Figs. 1 to 4 have been given the same reference numerals. The following is a discussion of the new features in Fig. 5.

A fuel (line 50), *e.g*. natural gas or a renewable fuel, is warmed in the heat exchanger (E101) to produce warmed fuel (line 52). Warmed fuel (line 52) is fed to a mixer (42) to produce a combined fuel (line 44) which is fed to the furnace (10) for combustion to heat the catalyst-filled tubes of the cracking reactor (8). The cooled cracked gas (line 28) is fed to the first PSA device (26). The gas is separated to form the first hydrogen product (line 30). The tail gas (line 70) from the first PSA device (26) is compressed in a compressor (K301) and the compressed gas is fed (line 72) to a second PSA device (74). The gas is separated to form the second hydrogen product (line 78) which is combined with the first hydrogen product (line 30) in line 80. The second PSA tail gas (line 76) is heated via heat exchanger E101 to produce warmed second PSA tail gas (line 82) which is fed to the mixer (42).

Secondary cracking allows ammonia that has slipped through the main cracking reactor (8) to be recovered by converting to hydrogen which is then recovered in a PSA device. Alternatively, placing the secondary cracking reactor on the PSA tail gas before it is used as fuel in the cracking reactor has the advantage of aiding combustion and reducing the likelihood of creating NOₓ in the combustion process as hydrogen is easier to combust than ammonia.

The secondary cracking reactor may be an adiabatic fixed bed reactor, but could be other types of reactor too e.g., a catalytic heat exchanger reactor. Typically, the secondary cracking reactor is an adiabatic fixed bed reactor.

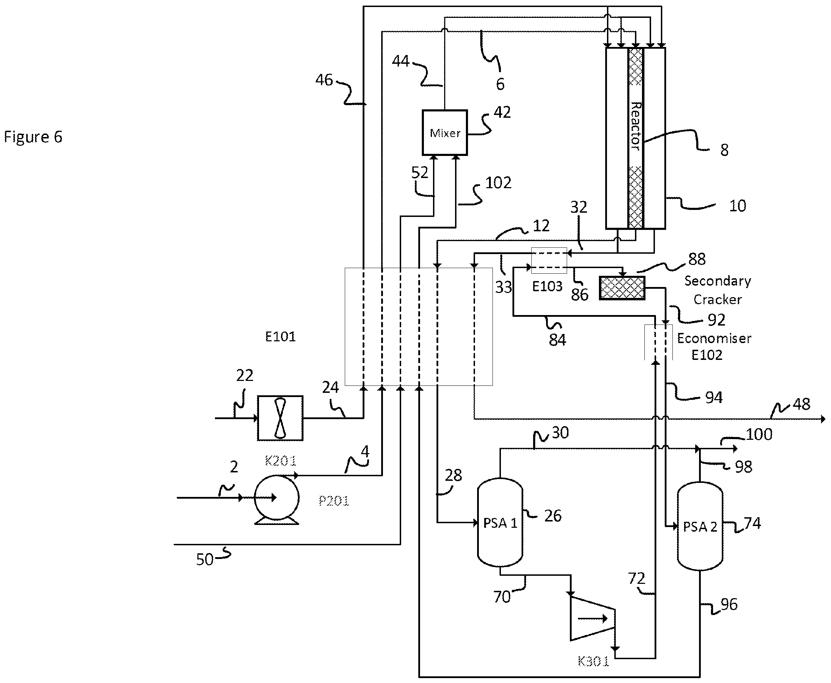

A secondary cracking reactor can be used where PSA tail gas from a first PSA device (26) (before or after recompression - or interstage) is fed to the catalyst in a second cracking reactor (88) to further crack the ammonia in the first PSA tail gas. This means that more hydrogen is recovered in the second PSA device (74) and reduces the problems associated with ammonia in the fuel to the burners. Such a process is depicted in Fig. 6.

The features of the process in Fig. 6 that are common to the processes of Figs. 1 to 5 have been given the same reference numerals. The following is a discussion of the new features in Fig. 6.

Figure 6 depicts a process according to the present invention in which PSA tail gas (line 70) from a first PSA device (26) is compressed in a compressor (K301) to produce compressed PSA tail gas (line 72). The compressed PSA tail gas (line 72) is heated by heat exchange in a first economizer (E102) with the second cracked gas (line 92) to produce heated compressed PSA tail gas (line 84). The heated compressed PSA tail gas (line 84) is further heated by heat exchange against the flue gas (line 32) in a second economizer (E103) to 550 °C to produce the feed (line 86) for the secondary cracker (88). The feed is passed through the catalyst within the secondary cracking reactor (88) to produce the second cracked gas (line 92). The catalyst used in the secondary cracking reactor can be any suitable catalyst for ammonia cracking *e.g.,* a nickel catalyst (GB768091A), iron catalyst (GB1353751A), ruthenium catalyst, rhodium catalyst and/or iridium catalyst (US2601221). Suitable organometallic catalysts may also be used *e.g*. metal amide and/or a metal imide catalysts (GB2589621A). The catalyst may be the same catalyst as used in the first ammonia cracker or may be a different catalyst. The catalyst may comprise one type of metal or may comprise more than one type of metal. The second cracked gas (line 92) is cooled by heat exchange in the first economizer (E102) with the compressed PSA tail gas (line 72) to produce a cooled second cracked gas (line 94) which is fed into the second PSA device (74). The second cracked gas is separated to form a second hydrogen product (line 98) and a second PSA tail gas (line 96). The first hydrogen product (line 30) and second hydrogen product (line 98) product are combined to produce a combined hydrogen product (line 100). The second PSA tail gas (line 96) is then mixed with fuel source (line 50) in a mixer (42).

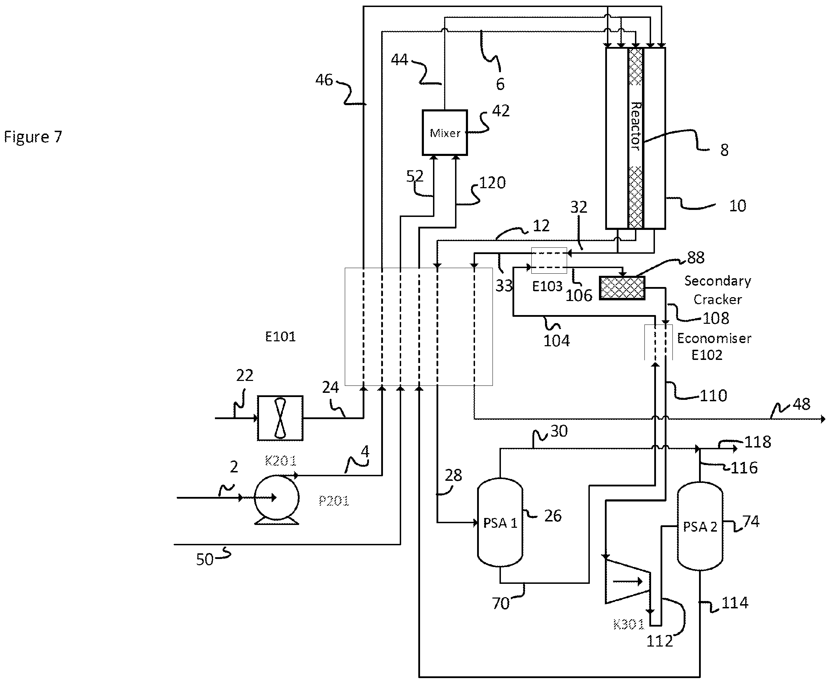

The secondary cracking reactor (88) can be located in several different positions within the process depicted in Fig. 6. In this regard, alternative arrangements of the process depicted in Fig. 6 are depicted in Figs. 7 to 9. It is also noted that when using pumped liquid ammonia as fuel for the furnace, the secondary cracking reactor can be used to crack the pumped liquid ammonia to produce cracked gas which is added to the primary fuel, optionally in mixer 42.

Fig. 7 shows the secondary cracking reactor (88) located upstream of a compressor (K301) and second PSA device (74), and downstream of the first PSA device (26). PSA tail gas (line 70) from a first PSA device (26) is heated by heat exchange in a first economizer (E102) with the second cracked gas (line 108) to produce heated PSA tail gas (line 104). The heated PSA tail gas (line 104) is further heated by heat exchange against the flue gas (line 32) in a second economizer (E103) and fed to the secondary cracker (88). The second cracked gas (line 108) is cooled by heat exchange in the first economizer (E102) with the first PSA tail gas (line 70) to produce a cooled second cracked gas (line 110) which is fed into compressor K301 and compressed to produce a compressed cooled second cracked gas (line 112). The compressed cooled second cracked gas (line 112) is fed to a second PSA device (74) and separated to form a second hydrogen product (line 116) and a second PSA tail gas (line 114). Placing the secondary cracking reactor (88) upstream of the compressor (K301) may increase conversion of ammonia to hydrogen as conversion of ammonia favours lower pressures over higher pressures.

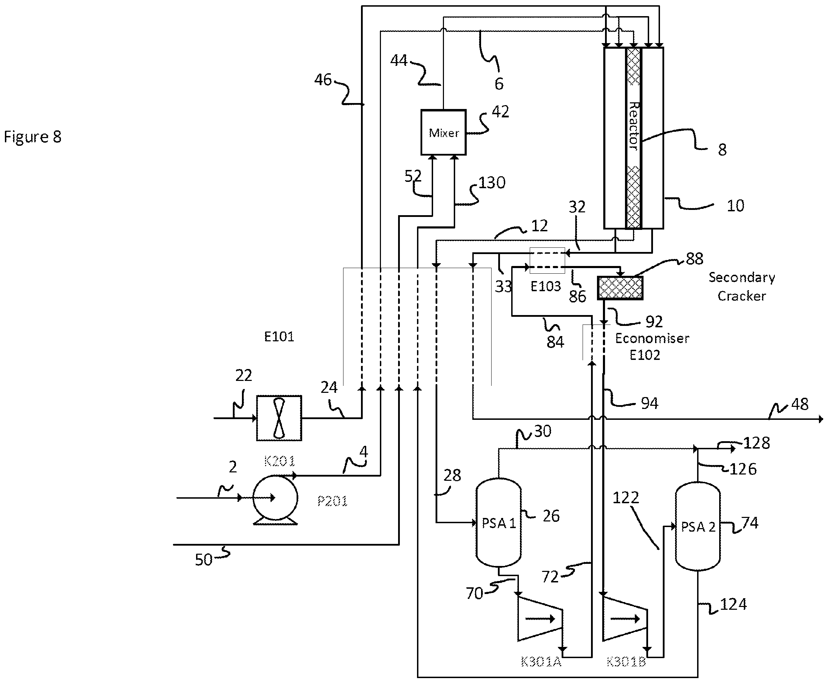

Fig. 8 shows the secondary cracking reactor (88) located at the interstage of a multistage compression system (K301A, K301B). Conducting the cracking reaction at the interstage pressure favours the products of the reaction more than if the reaction were carried out at the final pressure of the compression system. Accordingly, the amount of conversion of the ammonia at the lower pressure is greater than at the higher pressure.

PSA tail gas (line 70) from a first PSA device (26) is compressed in a first stage (K301A) of a multistage compressor to produce compressed PSA tail gas (line 72). The compressed PSA tail gas (line 72) is removed from an interstage of the multistage compressor, heated by heat exchange in a first economizer (E102) with the second cracked gas (line 92) to produce heated compressed PSA tail gas (line 84). The heated compressed PSA tail gas (line 84) is further heated by heat exchange against the flue gas (line 32) in a second economizer (E103) to 550 °C to produce the feed (line 86) for the secondary cracker (88). The feed is passed through the catalyst within the secondary cracking reactor (88) to produce the second cracked gas (line 92). The second cracked gas (line 92) is cooled by heat exchange in the first economizer (E102) with the compressed PSA tail gas (line 72) to produce a cooled second cracked gas (line 94) which is fed back to the interstage of the multistage compressor and compressed in a second stage (K301B) of the compressor to produce a compressed cooled second cracked gas (line 122). The compressed cooled second cracked gas (line 122) is fed into the second PSA device (74) and is separated to form a second hydrogen product (line 126) and a second PSA tail gas (line 124). The first hydrogen product (line 30) and second hydrogen product (line 168) product are combined to form a combined hydrogen product (line 128). The second PSA tail gas (line 124) is then mixed with fuel source (line 50) in a mixer (42).

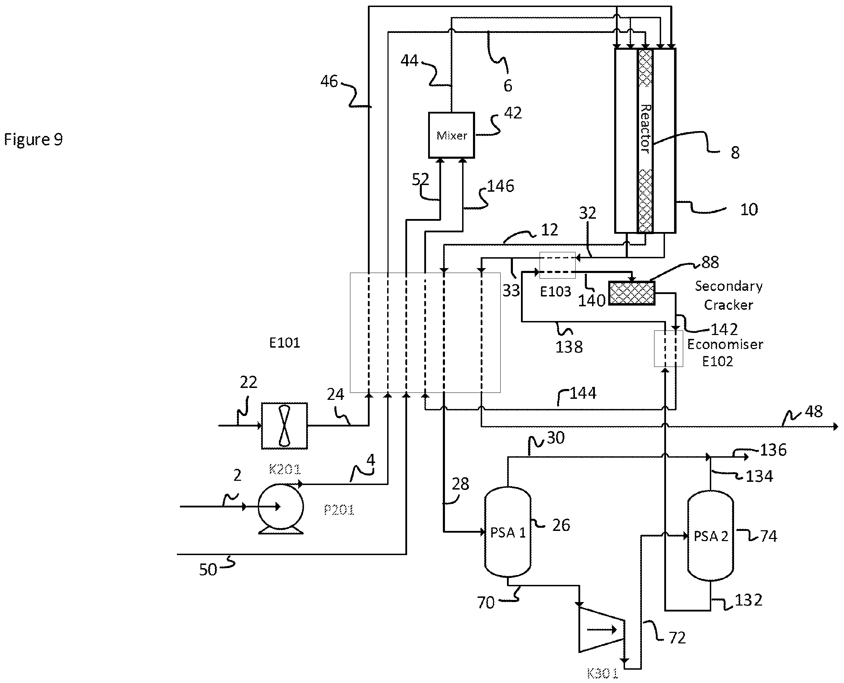

Fig. 9 shows the secondary cracking reactor (88) located downstream of the second PSA device (74). PSA tail gas (line 70) is compressed in a compressor (K301) to produce compressed PSA tail gas (line 72). Compressed PSA tail gas (line 72) is fed into the second PSA device (74) to produce a second hydrogen product (line 134) and a second PSA tail gas (line 132). The first and second hydrogen products (lines 30 & 134) are combined to form a combined hydrogen product (line 136). The second PSA tail gas (line 132) is heated by heat exchange in a first economizer (E102) with the second cracked gas (line 142) to produce heated second PSA tail gas (line 138). The heated second PSA tail gas (line 138) is further heated by heat exchange against the flue gas (line 32) in a second economizer (E103) to produce the feed (line 140) for the secondary cracker (88). The feed is passed through the catalyst within the secondary cracking reactor (88) to produce the second cracked gas (line 142). The second cracked gas (line 142) is cooled by heat exchange in the first economizer (E102) with the second PSA tail gas (line 132) to produce a cooled second cracked gas (line 144) which is passed through unit E101 to mixer 42 to produce fuel (line 44). In this arrangement, while there is no increase in hydrogen recovery, it is easier to combust hydrogen than ammonia as the problems associated with NOₓ generation caused by high levels of ammonia in the fuel are greatly reduced.

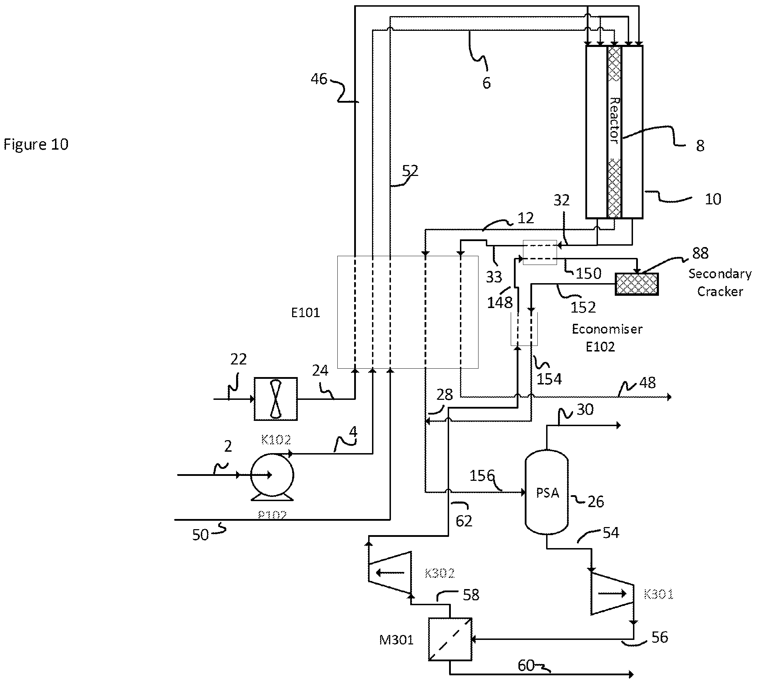

In Fig. 10, unconverted ammonia from the secondary cracking reactor (88) is recycled through the first PSA device (26) and the membrane unit (M301), leading to close to 100% ammonia conversion to hydrogen, with the only ammonia loss being with the non-permeate nitrogen-rich stream. Use of a membrane separates the first PSA tail gas to obtain a hydrogen permeate gas that contains ammonia. This gas is passed over a cracking catalyst. Advantages of this option include (i) lower velocity in the catalyst bed (meaning longer residence time) and (ii) removal of nitrogen product which will change the position of the equilibrium.

Figure 10 depicts a process according to the present invention in which PSA tail gas (line 54) from a first PSA device (26) is compressed in a compressor (K301) to produce compressed PSA tail gas (line 56). The compressed PSA tail gas (line 56) is passed through a membrane separator (M301) to produce a nitrogen-rich purge stream (line 60) and a hydrogen-rich gas comprising ammonia (line 58). The membrane separator (M301) may be any suitable membrane separator known in the art. Conventional membranes include those made from polyamide or polysulfone polymers which are known to be more tolerant of ammonia, or polyimide polymers which are known to be less tolerant of ammonia. The hydrogen-rich gas (line 58) is compressed in a second compressor (K302) to produce a compressed hydrogen-rich gas (62). Compressed hydrogen-rich gas (line 62) is heated to 350 °C by heat exchange in the first economizer (E102) to produce heated hydrogen-rich gas (line 148). The heated hydrogen-rich gas (line 148) is further heated to 550 °C by heat exchange in the second economizer (E103) to produce feed (line 150) for the secondary cracker (88). The feed is passed through the secondary cracker (88) to produce the second cracked gas (line 152). The second cracked gas (line 152) is cooled by heat exchange (E102) with the hydrogen-rich gas (line 62) in the first economizer (E102) to produce a cooled second cracked gas (line 154). The cooled second cracked gas (line 154) is recycled to the first PSA device (26) *via* line 156.

Whereas in the first and second PSA device option with the secondary compressor there is an equilibrium advantage to using a lower pressure feed to the secondary cracker. In this PSA/membrane configuration, any unconverted ammonia is recycled back through the PSA and membrane, so it is not necessary to achieve high conversation by operating the secondary cracker at a lower pressure.

The hydrogen recovery in the PSA devices in Figs. 10 to 12 need not be as high as in PSA-only schemes since hydrogen in the first PSA tail gas is being recycled. A higher PSA tail gas pressure reduces compressor power on the first PSA tail gas compressor which will reduce PSA hydrogen recovery but overall hydrogen recovery will still be 100%, minus any losses in the non-permeate nitrogen-rich stream, due to the tail gas recycling.

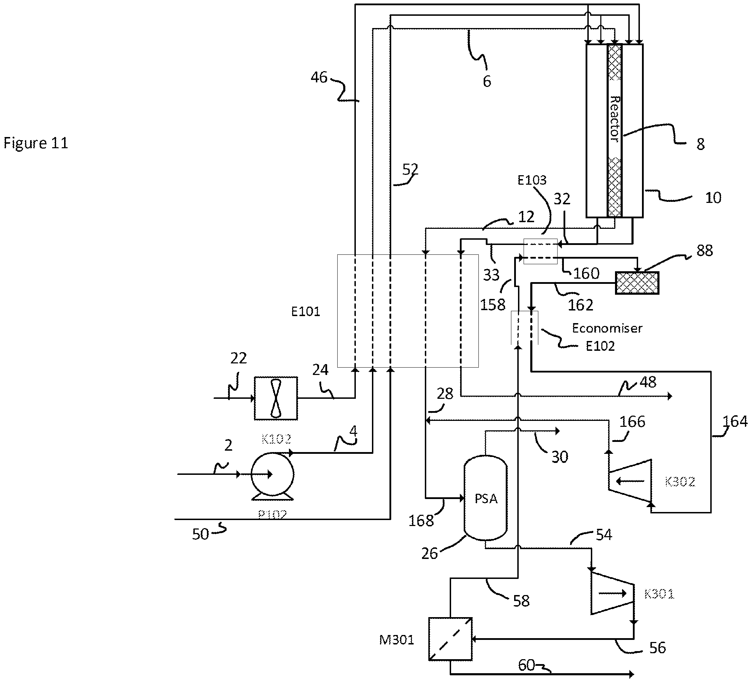

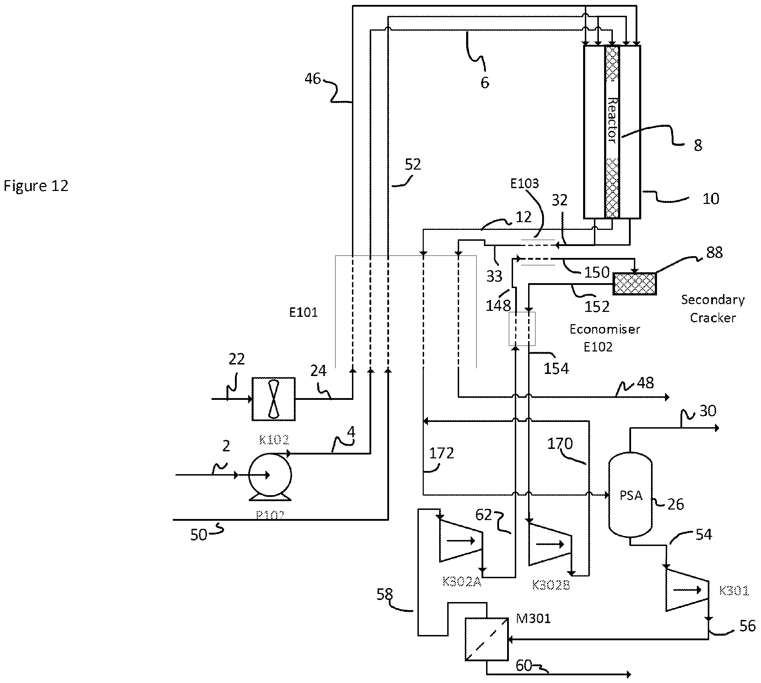

The secondary cracking reactor (88) can be located in several different positions within the process depicted in Fig. 10. In this regard, alternative arrangements of the process depicted in Fig. 10 are depicted in Figs. 11 and 12.

Fig. 11 shows the secondary cracker (88) located downstream of the membrane separator (M301) and upstream of the second compressor (K302). PSA tail gas (line 54) from a first PSA device (26) is compressed in a compressor (K301) to produce compressed PSA tail gas (line 56). The compressed PSA tail gas (line 56) is passed through a membrane separator (M301) to produce a nitrogen-rich purge stream (line 60) and a hydrogen-rich gas comprising ammonia (line 58). The hydrogen-rich gas (line 58) is heated by heat exchange in the first economizer (E102) to produce heated hydrogen-rich gas (line 158). The heated hydrogen-rich gas (line 158) is further heated by heat exchange in the second economizer (E103)to produce feed (line 160) for the secondary cracker (88). The feed is passed through the secondary cracker (88) to produce the second cracked gas (line 162). The second cracked gas (line 162) is cooled by heat exchange (E102) with the hydrogen-rich gas (line 58) in the first economizer (E102) to produce a cooled second cracked gas (line 164). The cooled second cracked gas (line 164) is compressed in a compressor (K302) to produce a compressed cooled second cracked gas (line 166) which is recycled to the first PSA device (26) *via* line 168. An advantage of this arrangement is that a higher ammonia conversion will be achieved as the amount of conversion of the ammonia at the lower pressure is greater than at higher pressure.

Fig. 12 shows the secondary cracker (88) located at the interstage of a multistage compression system (K302A, K302B). PSA tail gas (line 54) from a first PSA device (26) is compressed in a compressor (K301) to produce compressed PSA tail gas (line 56). The compressed PSA tail gas (line 56) is fed to a membrane separator (M301) to produce a nitrogen-rich purge stream (line 60) and a hydrogen-rich gas comprising ammonia (line 58). The hydrogen-rich gas (line 58) is compressed in a first stage (K301A) of the multistage compressor to produce a compressed hydrogen-rich gas which is removed (line 62) from an interstage of the compression system and heated by heat exchange in the first economizer (E102) to produce heated hydrogen-rich gas (line 148). The heated hydrogen-rich gas (line 148) is further heated by heat exchange in the second economizer (E103) to produce feed (line 150) for the secondary cracker (88). The feed is passed through the secondary cracker (88) to produce the second cracked gas (line 152). The second cracked gas (line 152) is cooled by heat exchange (E102) with the hydrogen-rich gas (line 62) in the first economizer (E102) to produce a cooled second cracked gas (line 154). The cooled second cracked gas (line 154) is fed back to the interstage of the compression system and compressed in a second stage (K301B) to produce a compressed cooled second cracked gas (line 170). The compressed cooled second cracked gas (line 170) is recycled to the first PSA device (26) *via* line 172.

The invention will now be described with reference to the following Reference Examples and nonlimiting Invention Examples

### EXAMPLES

For the purposes of the simulations, both the Invention Examples and the Reference Examples assume an equilibrium for the cracking reaction at 11 bar and 500°C.

### REFERENCE EXAMPLE 1

The process depicted in Fig. 2 has been simulated by computer (Aspen Plus, ver. 10, Aspen Technology, Inc.) and the results are depicted in Table 1.

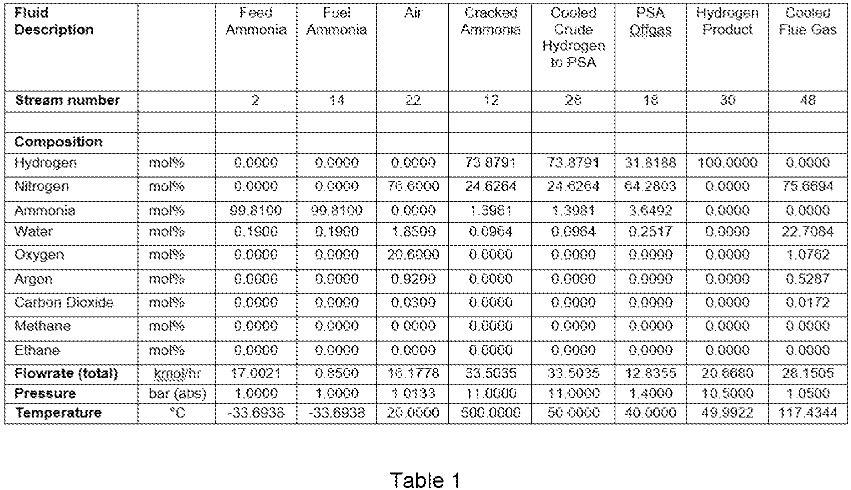

In this Reference Example, hydrogen recovery from the ammonia is 77.18% with the PSA recovery at 83.5%. The total power of the ammonia feed pump (P201), the ammonia fuel pump (P202) and the air fan (K201) is about 1.36 kW.

### REFERENCE EXAMPLE 2

The process depicted in Fig. 3 has been simulated by computer (Aspen Plus, ver. 10) and the results are depicted in Table 2.

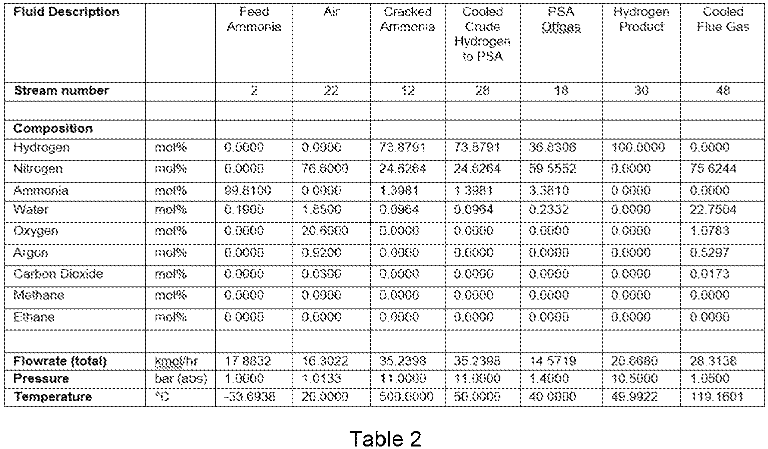

In this Reference Example, hydrogen recovery from the ammonia is 77.05% with the PSA recovery at 79.4%. The total power of the ammonia feed pump (P201) and the air fan (K201) is about 1.37 kW.

### REFERENCE EXAMPLE 3

The process depicted in Fig. 5 has been simulated by computer (Aspen Plus, ver. 10) and the results are depicted in Table 3.

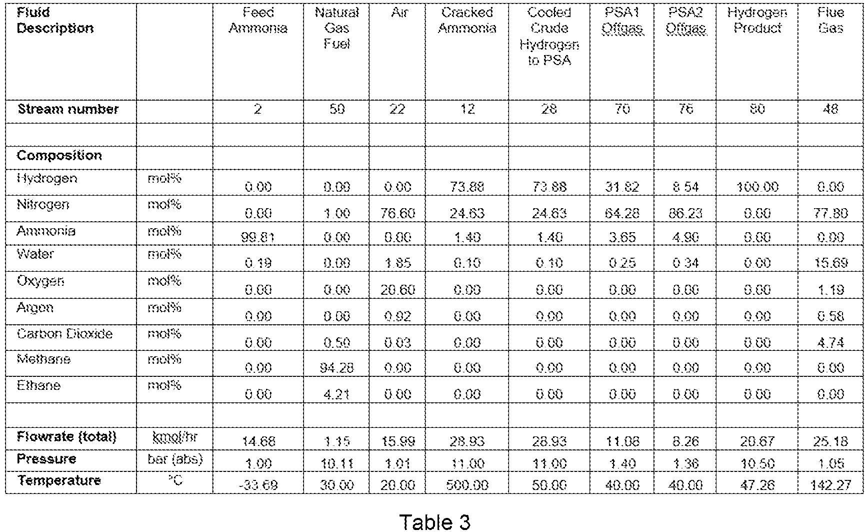

In this Reference Example, hydrogen recovery from the ammonia is 93.65%. The total power of the ammonia feed pump (P201), air fan (K201) and first PSA tail gas compression is about 27.92 kW.

### INVENTION EXAMPLE 1

The process depicted in Fig. 6 has been simulated by computer (Aspen Plus, ver. 10) and the results are depicted in Table 4.

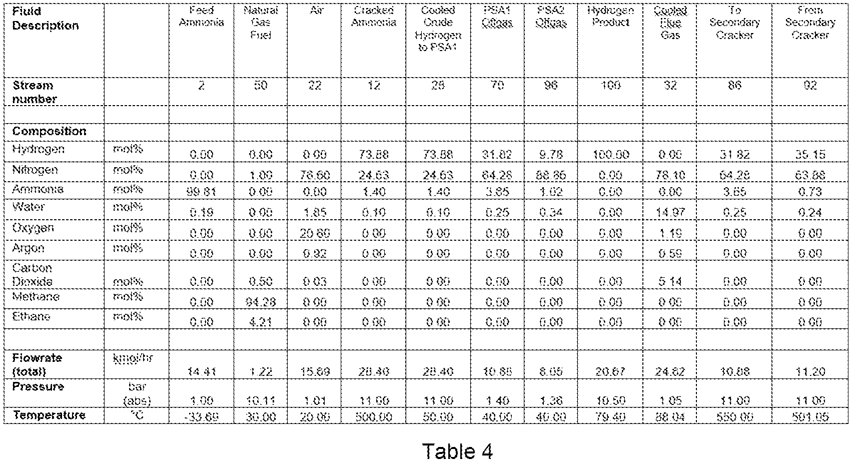

In this Invention Example, hydrogen recovery from the ammonia is 95.60%. The total power of the ammonia feed pump (P201), air fan (K201) and first PSA tail gas compression is about 28.36 kW. Just under 80% of the ammonia that slips through the first cracking reactor is cracked into additional hydrogen and nitrogen in the second cracking reactor operating at 11 bar.

### INVENTION EXAMPLE 2

The process depicted in Fig. 8 has been simulated by computer (Aspen Plus, ver. 10) and the results are depicted in Table 5.

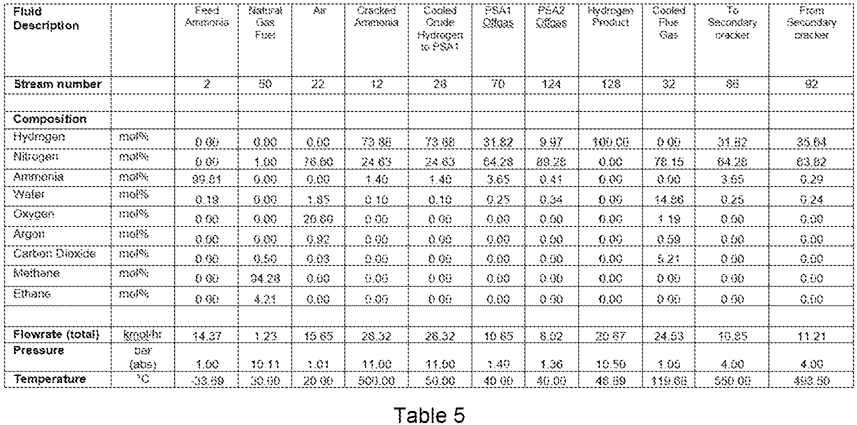

In this Invention Example, hydrogen recovery from the ammonia is 95.87%. The total power of the ammonia feed pump (P201), air fan (K201), first PSA tail gas compression and second PSA tail gas compression is about 28.32 kW. Just over 92% of the ammonia that slips through the first cracking reactor is cracked into additional hydrogen and nitrogen by the second cracking reactor operating at a lower pressure (4 bar) than in Invention Example 1.

### INVENTION EXAMPLE 3

The process depicted in Fig. 10 has been simulated by computer (Aspen Plus, ver. 10) and the results are depicted in Table 6.

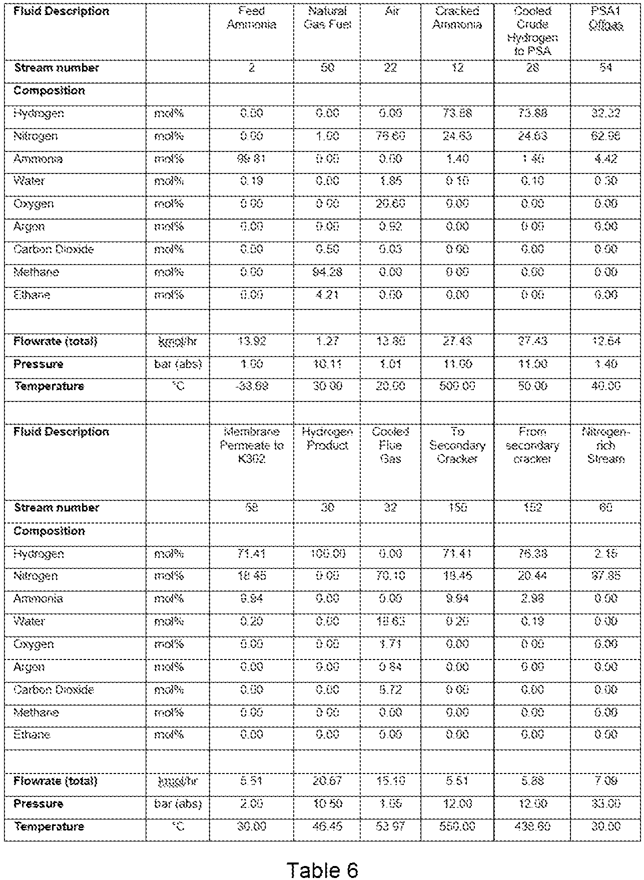

In this Invention Example, hydrogen recovery from the ammonia is 99.00%. The total power of the ammonia feed pump (P201), air fan (K201), PSA tail gas compression and membrane compression is about 59.24 kW. About 70% of the ammonia that slips through the first cracking reactor is converted into additional hydrogen and nitrogen in the second cracking reactor.

The present invention is not to be limited in scope by the specific aspects or embodiments disclosed in the examples which are intended as illustrations of a few aspects of the invention and any embodiments that are functionally equivalent are within the scope of this invention. Various modifications of the invention in addition to those shown and described herein will become apparent to those skilled in the art and are intended to fall within the scope of the appended claims.

## Claims

1. A method for producing hydrogen from ammonia, comprising:
pressurizing (P201) liquid ammonia (2);
heating (and optionally vaporizing) the liquid ammonia (4) by heat exchange (E101) with one or more hot fluids (12, 32) to produce heated ammonia (6);
combusting a fuel (50, 52) in a furnace (10) to heat a first set of catalyst-containing reactor tubes (8) and to form a flue gas (32);
supplying the heated ammonia (6) to the first set of catalyst-containing reactor tubes (8) to cause cracking of ammonia into a first cracked gas (12) containing hydrogen gas, nitrogen gas and residual ammonia; and
purifying the first cracked gas (12) in a first PSA (26) to produce a first hydrogen product gas (30) and a first PSA tail gas (70); and
supplying the first PSA tail gas (70), or a gas derived therefrom, as feed to a secondary cracking reactor (88) comprising a catalyst to cause cracking of ammonia into a second cracked gas (92) containing hydrogen gas and nitrogen gas;
wherein the one or more hot fluids (12, 32) comprise the flue gas (32) and/or the first cracked gas (12).

2. A method according to Claim 1, wherein the feed to the secondary cracking reactor (88) is heated by heat exchange (E102, E103) with the second cracked gas (92) and/or with the flue gas (32).

3. A method according to Claim 1 or Claim 2, wherein the secondary cracking reactor (88) operates at a temperature in the range from 250°C to 700°C.

4. A method according to any of the preceding claims, wherein the feed to the secondary cracking reactor (88) is compressed (K301) prior to being supplied to the reactor (88), wherein the secondary cracking reactor (88) optionally operates at a pressure from 1.5 bar to 50 bar or at a pressure from 10 bar to 12 bar or at a pressure from 3 bar to 5 bar.

5. A method according to any of the preceding claims, wherein the first PSA tail gas (70) is compressed (K301) prior to being fed to the secondary cracking reactor (88), wherein the first PSA tail gas (70) is compressed optionally in a multistage compressor (K301A, K301B) comprising two stages, said process comprising:
taking the feed to the secondary cracker (88) from an interstage of the compressor (K301A); and
supplying the second cracked gas (92) to the interstage of the compressor (K301B) for further compression.

6. A method according to any of the preceding claims, wherein hydrogen is recovered from the second cracked gas (92), optionally by purifying the second cracked gas (92) in a second PSA (74) to produce a second hydrogen product gas (98, 116, 126) and a second PSA tail gas (96, 114, 124), wherein the fuel combusted in the furnace optionally comprises the second PSA tail gas (96, 114, 124).

7. A method according to any of Claims 1 to 4, comprising purifying the first PSA tail gas (70) in a second PSA (74) to produce a second hydrogen product gas (134) and a second PSA tail gas (132), and supplying the second PSA tail gas (132) as the feed to the secondary cracking reactor (88), wherein the fuel combusted in the furnace (10) optionally comprises the second cracked gas (142).

8. A method according to any of Claims 1 to 4, comprising:
compressing the first PSA tail gas (54) in a first compressor (K301) to produce compressed first PSA tail gas (56); and
separating the compressed first PSA tail gas (56) using a membrane separator (M301) to produce a hydrogen-rich permeate gas comprising ammonia (58), and a nitrogen-rich retentate gas (60);
wherein the permeate gas (58) is supplied as the feed to the secondary cracking reactor (88).

9. A method according to Claim 8, wherein the permeate gas (58) is compressed in a second compressor (K302) before being supplied as the feed to the secondary cracking reactor (88), wherein the second compressor (K302) optionally comprises two stages, said process comprising:
taking the feed to the secondary cracker (88) from an interstage of the second compressor (K302A); and
supplying the second cracked gas (152) to the interstage of the second compressor (K302B) for further compression.

10. An apparatus for producing hydrogen from ammonia, comprising:
a pump (P201) for pressurizing liquid ammonia;
at least one heat exchanger (E101) in fluid communication with the pump (P102) for heating (and optionally vaporizing) the liquid ammonia from the pump (P201) by heat exchange with one or more hot fluids;
a first set of catalyst-containing reactor tubes (8) in fluid communication with the heat exchanger(s) (E101), for cracking heated ammonia from the heat exchanger(s) (E101) to produce a first cracked gas containing hydrogen gas, nitrogen gas and residual ammonia;
a furnace (10) in thermal communication with the first set of catalyst-containing reactor tubes (8) for combustion of a fuel to heat the first set of catalyst-containing reactor tubes (8) and to form a flue gas;
a first PSA device (26) in fluid communication with the first set of catalyst-containing reactor tubes (8) for purifying the first cracked gas to produce a first hydrogen product gas and a first PSA tail gas;
a secondary cracking reactor (88) comprising a catalyst for cracking the first PSA tail gas, or a gas derived therefrom, to produce a second cracked gas comprising hydrogen gas and nitrogen gas; and
a second PSA device (74) for recovering hydrogen from the second cracked gas or the first PSA tail gas to produce a second hydrogen product gas and a second PSA tail gas, wherein the apparatus comprises a flue gas conduit (32) for feeding the flue gas as a hot fluid from the furnace (10) to the heat exchanger(s) (E101) and/or a cracked gas conduit (12) for feeding the first cracked gas as a hot fluid from the first set of catalyst-containing reactor tubes (8) to the heat exchanger(s) (E101).

11. An apparatus according to Claim 10, wherein the apparatus comprises a compressor (K301) for compressing the first PSA tail gas upstream of the secondary cracking reactor (88), wherein the apparatus optionally comprises a multistage compressor (K301A, K301B) comprising:
a first stage (K301A) for compressing the first PSA tail gas upstream of the secondary cracking reactor (88); and
a second stage (K301B) for compressing the second cracked gas downstream of the secondary cracking reactor (88).

12. An apparatus according to Claim 10 or Claim 11, wherein the second PSA device (74) is downstream of the compressor (K301) and upstream of the secondary cracking reactor (88).

13. An apparatus according to Claim 10, wherein the apparatus comprises a compressor (K301) for compressing the second cracked gas upstream of the second PSA device (74).

14. An apparatus for producing hydrogen from ammonia, comprising:
a pump (P201) for pressurizing liquid ammonia;
at least one heat exchanger (E101) in fluid communication with the pump (P102) for heating (and optionally vaporizing) the liquid ammonia from the pump (P201) by heat exchange with one or more hot fluids;
a first set of catalyst-containing reactor tubes (8) in fluid communication with the heat exchanger(s) (E101), for cracking heated ammonia from the heat exchanger(s) (E101) to produce a first cracked gas containing hydrogen gas, nitrogen gas and residual ammonia;
a furnace (10) in thermal communication with the first set of catalyst-containing reactor tubes (8) for combustion of a fuel to heat the first set of catalyst-containing reactor tubes (8) and to form a flue gas;
a first PSA device (26) in fluid communication with the first set of catalyst-containing reactor tubes (8) for purifying the first cracked gas to produce a hydrogen product gas and a first PSA tail gas;
a secondary cracking reactor (88) comprising a catalyst for cracking the first PSA tail gas, or a gas derived therefrom, to produce a second cracked gas comprising hydrogen gas and nitrogen gas; and
a membrane separator (M301) for separating the first PSA tail gas to produce a nitrogen-rich retentate gas, and a hydrogen-rich permeate gas comprising ammonia for further processing in the secondary cracking reactor (88), wherein the apparatus comprises a flue gas conduit (32) for feeding the flue gas as a hot fluid from the furnace (10) to the heat exchanger(s) (E101) and/or a cracked gas conduit (12) for feeding the first cracked gas as a hot fluid from the first set of catalyst-containing reactor tubes (8) to the heat exchanger(s) (E101).

15. An apparatus according to Claim 14, comprising a first compressor (K301) to compress the first PSA tail gas before separation in the membrane separator.

16. An apparatus according to Claim 14 or Claim 15, comprising a second compressor (K302) for compressing the hydrogen-rich gas.

17. An apparatus according to Claim 14 or Claim 15, wherein the apparatus comprises a multistage compressor (K302A, K302B) comprising:
A first stage (K302A) for compressing the hydrogen-rich gas upstream of the secondary cracking reactor (88); and
a second stage (K302B) for compressing the second cracked gas downstream of the secondary cracking reactor (88).

18. An apparatus according to Claim 14 or Claim 15, comprising a second compressor (K302) for compressing the second cracked gas.

## Patentansprüche

1. Verfahren zum Erzeugen von Wasserstoff aus Ammoniak, umfassend:
Unterdrucksetzen (P201) von flüssigem Ammoniak (2),
Erhitzen (und optionales Verdampfen) des flüssigen Ammoniaks (4) durch einen Wärmetausch (E101) mit einem oder mehreren heißen Fluiden (12, 32) für das Erzeugen von erhitztem Ammoniak (6),
Verbrennen eines Brennstoffs (50, 52) in einem Ofen (10) für das Erhitzen eines ersten Satzes von einen Katalysator enthaltenden Reaktorröhren (8) und das Bilden eines Rauchgases (32),
Zuführen des erhitzten Ammoniaks (6) zu dem ersten Satz von einen Katalysator enthaltenden Reaktorröhren (8), um ein Spalten von Ammoniak in ein erstes Spaltgas (12), das Wasserstoffgas, Stickstoffgas und Restammoniak enthält, zu veranlassen, und
Reinigen des ersten Spaltgases (12) in einer ersten DWA (Druckwechsel-Adsorption) (26) für das Erzeugen eines ersten Wasserstoffproduktgases (30) und eines ersten DWA-Restgases (70), und
Zuführen des ersten DWA-Restgases (70) oder eines davon abgeleiteten Gases als einer Zufuhr zu einem sekundären Spaltreaktor (88), der einen Katalysator enthält, um ein Spalten von Ammoniak in ein zweites Spaltgas (92), das Wasserstoffgas und Stickstoffgas enthält, zu veranlassen,
wobei das eine oder die mehreren heißen Fluide (12, 32) das Rauchgas (32) und/oder das erste Spaltgas (12) umfassen.

2. Verfahren nach Anspruch 1, wobei die Zufuhr zu dem sekundären Spaltreaktor (88) durch einen Wärmetausch (E102, E103) mit dem zweiten Spaltgas (92) und/oder mit dem Rauchgas (32) erhitzt wird.

3. Verfahren nach Anspruch 1 oder 2, wobei der sekundäre Spaltreaktor (88) bei einer Temperatur im Bereich von 250°C bis 700°C betrieben wird.

4. Verfahren nach einem der vorstehenden Ansprüche, wobei die Zufuhr zu dem sekundären Spaltreaktor (88) komprimiert wird (K301), bevor sie zu dem Reaktor (88) zugeführt wird, wobei der sekundäre Spaltreaktor (88) optional bei einem Druck von 1,5 bar bis 50 bar oder bei einem Druck von 10 bar bis 12 bar oder bei einem Druck von 3 bar bis 5 bar betrieben wird.

5. Verfahren nach einem der vorstehenden Ansprüche, wobei das erste DWA-Restgas (70) komprimiert wird (K301), bevor es zu dem sekundären Spaltreaktor (88) zugeführt wird, wobei das erste DWA-Restgas (70) optional in einem mehrstufigen Kompressor (K301A, K301B), der zwei Stufen aufweist, komprimiert wird, wobei das Verfahren umfasst:
Nehmen der Zufuhr zu dem sekundären Spaltreaktor (88) von einer Zwischenstufe des Kompressors (K301A), und
Zuführen des zweiten Spaltgases (92) zu der Zwischenstufe des Kompressors (K301B) für eine weitere Kompression.

6. Verfahren nach einem der vorstehenden Ansprüche, wobei Wasserstoff aus dem zweiten Spaltgas (92) wiedergewonnen wird, optional durch das Reinigen des zweiten Spaltgases (92) in einer zweiten DWA (74) für das Erzeugen eines zweiten Wasserstoff-Produktgases (98, 116, 126) und eines zweiten DWA-Restgases (96, 114, 124), wobei der in dem Ofen verbrannte Brennstoff optional das zweite DWA-Restgas (96, 114, 124) umfasst.

7. Verfahren nach einem der Ansprüche 1 bis 4, das das Reinigen des ersten DWA-Restgases (70) in einem zweiten DWA (74) für das Erzeugen eines zweiten Wasserstoff-Produktgases (134) und eines zweiten DWA-Restgases (132) aufweist, und Zuführen des zweiten DWA-Restgases (132) als der Zufuhr zu dem sekundären Spaltreaktor (88), wobei der in dem Ofen (10) verbrannte Brennstoff optional das zweite Spaltgas (142) umfasst.

8. Verfahren nach einem der Ansprüche 1 bis 4, umfassend:
Komprimieren des ersten DWA-Restgases (54) in einem ersten Kompressor (K301) für das Erzeugen eines komprimierten ersten DWA-Restgases (56), und
Trennen des komprimierten ersten DWA-Restgases (56) unter Verwendung eines Membran-Separators (M301) für das Erzeugen eines wasserstoffreichen Permeatgases, das Ammoniak (58) umfasst, und eines stickstoffreichen Retentatgases (60),
wobei das Permeatgas (58) als die Zufuhr zu dem sekundären Spaltreaktor (88) zugeführt wird.

9. Verfahren nach Anspruch 8, wobei das Permeatgas (58) in einem zweiten Kompressor (K302) komprimiert wird, bevor es als die Zufuhr zu dem sekundären Spaltreaktor (88) zugeführt wird, wobei der zweite Kompressor (K302) optional zwei Stufen aufweist, wobei das Verfahren umfasst:
Nehmen der Zufuhr zu dem sekundären Spaltreaktor (88) von einer Zwischenstufe des zweiten Kompressors (K302A), und
Zuführen des zweiten Spaltgases (152) zu der Zwischenstufe des zweiten Kompressors (K302B) für eine weitere Kompression.

10. Vorrichtung zum Erzeugen von Wasserstoff aus Ammoniak, umfassend:
eine Pumpe (P201) zum Unterdrucksetzen von flüssigem Ammoniak,
wenigstens einen Wärmetauscher (E101) in einer Fluidverbindung mit der Pumpe (P102) für das Erhitzen (und optionale Verdampfen) des flüssigen Ammoniaks von der Pumpe (P201) durch einen Wärmetausch mit einem oder mehreren heißen Fluiden,
einen ersten Satz von einen Katalysator enthaltenden Reaktorröhren (8) in einer Fluidverbindung mit dem oder den Wärmetauschern (E101) für das Spalten von erhitztem Ammoniak von dem oder den Wärmetauschern (E101), um ein erstes Spaltgas, das Wasserstoffgas, Stickstoffgas und Restammoniak enthält, zu erzeugen,
einen Ofen (10) in einer thermischen Verbindung mit dem ersten Satz von einen Katalysator enthaltenden Reaktorröhren (8) für das Verbrennen eines Brennstoffs, um den ersten Satz von einen Katalysator enthaltenden Reaktorröhren (8) zu erhitzen und ein Rauchgas zu bilden,
eine erste DWA (Druckwechsel-Adsorption)-Einrichtung (26) in einer Fluidverbindung mit dem ersten Satz von einen Katalysator enthaltenden Reaktorröhren (8) für das Reinigen des ersten Spaltgases, um ein erstes Wasserstoff-Produktgas und ein erstes DWA-Restgas zu erzeugen,
einen sekundären Spaltreaktor (88), der einen Katalysator für das Spalten des ersten DWA-Restgases oder eines davon abgeleiteten Gases, um ein zweites Spaltgas, das Wasserstoffgas und Stickstoffgas enthält, zu erzeugen, umfasst, und
eine zweite DWA-Einrichtung (74) zum Wiedergewinnen von Wasserstoff aus dem zweiten Spaltgas oder dem ersten DWA-Restgas für das Erzeugen eines zweiten Wasserstoff-Produktgases und eines zweiten DWA-Restgases, wobei die Vorrichtung eine Rauchgasleitung (32) zum Zuführen des Rauchgases als eines heißen Fluids von dem Ofen (10) zu dem oder den Wärmetauschern (E101) und/oder eine Spaltgasleitung (12) zum Zuführen des ersten Spaltgases als eines heißen Fluids von dem ersten Satz von einen Katalysator enthaltenden Reaktorröhren (8) zu dem oder den Wärmetauschern (E101) umfasst.

11. Vorrichtung nach Anspruch 10, wobei die Vorrichtung einen Kompressor (K301) zum Komprimieren des ersten DWA-Restgases stromaufwärts von dem sekundären Spaltreaktor (88) umfasst, wobei die Vorrichtung optional einen mehrstufigen Kompressor (K301A, K301B) umfasst, der umfasst:
eine erste Stufe (K301A) zum Komprimieren des ersten DWA-Restgases stromaufwärts von dem sekundären Spaltreaktor (88), und
eine zweite Stufe (K301B) zum Komprimieren des zweiten Spaltgases stromabwärts von dem sekundären Spaltreaktor (88).

12. Vorrichtung nach Anspruch 10 oder 11, wobei die zweite DWA-Einrichtung (74) stromabwärts von dem Kompressor (K301) und stromaufwärts von dem sekundären Spaltreaktor (88) angeordnet ist.

13. Vorrichtung nach Anspruch 10, wobei die Vorrichtung einen Kompressor (K301) zum Komprimieren des zweiten Spaltgases stromaufwärts von der zweiten DWA-Einrichtung (74) umfasst.

14. Vorrichtung zum Erzeugen von Wasserstoff aus Ammoniak, umfassend:
eine Pumpe (P201) zum Unterdrucksetzen von flüssigem Ammoniak,
wenigstens einen Wärmetauscher (E101) in einer Fluidverbindung mit der Pumpe (P102) für das Erhitzen (und optionale Verdampfen) des flüssigen Ammoniaks von der Pumpe (P201) durch einen Wärmetausch mit einem oder mehreren heißen Fluiden,
einen ersten Satz von einen Katalysator enthaltenden Reaktorröhren (8) in einer Fluidverbindung mit dem oder den Wärmetauschern (E101) für das Spalten von erhitztem Ammoniak von dem oder den Wärmetauschern (E101), um ein erstes Spaltgas, das Wasserstoffgas, Stickstoffgas und Restammoniak enthält, zu erzeugen,
einen Ofen (10) in einer thermischen Verbindung mit dem ersten Satz von einen Katalysator enthaltenden Reaktorröhren (8) für das Verbrennen eines Brennstoffs, um den ersten Satz von einen Katalysator enthaltenden Reaktorröhren (8) zu erhitzen und ein Rauchgas zu bilden,
eine erste DWA (Druckwechsel-Adsorption)-Einrichtung (26) in einer Fluidverbindung mit dem ersten Satz von einen Katalysator enthaltenden Reaktorröhren (8) für das Reinigen des ersten Spaltgases, um ein erstes Wasserstoff-Produktgas und ein erstes DWA-Restgas zu erzeugen,
einen sekundären Spaltreaktor (88), der einen Katalysator für das Spalten des ersten DWA-Restgases oder eines davon abgeleiteten Gases, um ein zweites Spaltgas, das Wasserstoffgas und Stickstoffgas enthält, zu erzeugen, umfasst, und
einen Membranseparator (M301) zum Trennen des ersten DWA-Restgases, um ein stickstoffreiches Retentatgas und ein wasserstoffreiches Permeatgas, das Ammoniak für eine weitere Verarbeitung in dem sekundären Spaltreaktor (88) umfasst, zu erzeugen, wobei die Vorrichtung eine Rauchgasleitung (32) zum Zuführen des Rauchgases als eines heißen Fluids von dem Ofen (10) zu dem oder den Wärmetauschern (E101) und/oder eine Spaltgasleitung (12) zum Zuführen des ersten Spaltgases als eines heißen Fluids von dem ersten Satz von einen Katalysator enthaltenden Reaktorröhren (8) zu dem oder den Wärmetauschern (E101) umfasst.

15. Vorrichtung nach Anspruch 14, die einen ersten Kompressor (K301) für das Komprimieren des ersten DWA-Restgases vor der Trennung in dem Membranseparator umfasst.

16. Vorrichtung nach Anspruch 14 oder 15, die einen zweiten Kompressor (K302) für das Komprimieren des wasserstoffreichen Gases umfasst.

17. Vorrichtung nach Anspruch 14 oder 15, wobei die Vorrichtung einen mehrstufigen Kompressor (K302A, K302B) umfasst, der umfasst:
eine erste Stufe (K302A) zum Komprimieren des wasserstoffreichen Gases stromaufwärts von dem sekundären Spaltreaktor (88), und
eine zweite Stufe (K302B) zum Komprimieren des zweiten Spaltgases stromabwärts von dem sekundären Spaltreaktor (88).

18. Vorrichtung nach Anspruch 14 oder 15, die einen zweiten Kompressor (K302) für das Komprimieren des zweiten Spaltgases umfasst.

## Revendications

1. Procédé de production d'hydrogène à partir d'ammoniac, comprenant :
la mise sous pression (P201) d'ammoniac liquide (2) ;
le chauffage (et éventuellement la vaporisation) de l'ammoniac liquide (4) par échange thermique (E101) avec un ou plusieurs fluides chauds (12, 32) pour produire de l'ammoniac chauffé (6) ;
la combustion d'un combustible (50, 52) dans un four (10) pour chauffer un premier ensemble de tubes réacteurs contenant un catalyseur (8) et former un gaz de combustion (32) ;
l'alimentation de l'ammoniac chauffé (6) au premier ensemble de tubes réacteurs contenant un catalyseur (8) pour provoquer le craquage de l'ammoniac en un premier gaz craqué (12) contenant de l'hydrogène gazeux, de l'azote gazeux et de l'ammoniac résiduel ; et
la purification du premier gaz craqué (12) dans un premier PSA (26) pour produire un premier gaz hydrogène produit (30) et un premier gaz résiduaire de PSA (70) ; et
l'alimentation du premier gaz résiduaire de PSA (70), ou d'un gaz dérivé de celui-ci, en tant que charge d'alimentation à un réacteur de craquage secondaire (88) comprenant un catalyseur pour provoquer le craquage de l'ammoniac en un second gaz craqué (92) contenant de l'hydrogène gazeux et de l'azote gazeux ;
dans lequel le ou les fluides chauds (12, 32) comprennent le gaz de combustion (32) et/ou le premier gaz craqué (12).

2. Procédé selon la revendication 1, dans lequel la charge d'alimentation au réacteur de craquage secondaire (88) est chauffée par échange thermique (E102, E103) avec le second gaz craqué (92) et/ou avec le gaz de combustion (32).

3. Procédé selon la revendication 1 ou 2, dans lequel le réacteur de craquage secondaire (88) fonctionne à une température dans la plage de 250 °C à 700 °C.

4. Procédé selon l'une quelconque des revendications précédentes, dans lequel la charge d'alimentation au réacteur de craquage secondaire (88) est comprimée (K301) avant d'être alimentée au réacteur (88), dans lequel le réacteur de craquage secondaire (88) fonctionne éventuellement à une pression de 1,5 bars à 50 bars ou à une pression de 10 bars à 12 bars ou à une pression de 3 bars à 5 bars.

5. Procédé selon l'une quelconque des revendications précédentes, dans lequel le premier gaz résiduaire de PSA (70) est comprimé (K301) avant d'être alimenté au réacteur de craquage secondaire (88), dans lequel le premier gaz résiduaire de PSA (70) est éventuellement comprimé dans un compresseur multi-étages (K301A, K301B) comprenant deux étages, ledit procédé comprenant :
l'acheminement de la charge d'alimentation vers le craqueur secondaire (88) depuis un étage intermédiaire du compresseur (K301A) ; et
l'alimentation du second gaz craqué (92) à l'étage intermédiaire du compresseur (K301B) pour une compression supplémentaire

6. Procédé selon l'une quelconque des revendications précédentes, dans lequel l'hydrogène est récupéré à partir du second gaz craqué (92), éventuellement par purification du second gaz craqué (92) dans un second PSA (74) pour produire un second gaz hydrogène produit (98, 116, 126) et un second gaz résiduaire de PSA (96, 114, 124), dans lequel le combustible brûlé dans le four comprend éventuellement le second gaz résiduaire de PSA (96, 114, 124).

7. Procédé selon l'une quelconque des revendications 1 à 4, comprenant la purification du premier gaz résiduaire de PSA (70) dans un second PSA (74) pour produire un second gaz hydrogène produit (134) et un second gaz résiduaire de PSA (132), et l'alimentation du second gaz résiduaire de PSA (132) en tant que charge d'alimentation au réacteur de craquage secondaire (88), dans lequel le combustible brûlé dans le four (10) comprend éventuellement le second gaz craqué (142).

8. Procédé selon l'une quelconque des revendications 1 à 4, comprenant :
la compression du premier gaz résiduaire de PSA (54) dans un premier compresseur (K301) pour produire un premier gaz résiduaire de PSA (56) comprimé ; et
la séparation du premier gaz résiduaire de PSA (56) comprimé à l'aide d'un séparateur à membrane (M301) pour produire un perméat gazeux riche en hydrogène comprenant de l'ammoniac (58), et un rétentat gazeux riche en azote (60) ;
dans lequel le perméat gazeux (58) est alimenté en tant que charge d'alimentation au réacteur de craquage secondaire (88).

9. Procédé selon la revendication 8, dans lequel le perméat gazeux (58) est comprimé dans un second compresseur (K302) avant d'être alimenté en tant que charge d'alimentation au réacteur de craquage secondaire (88), dans lequel le second compresseur (K302) comprend éventuellement deux étages, ledit procédé comprenant :
l'acheminement de la charge d'alimentation vers le craqueur secondaire (88) depuis un étage intermédiaire du second compresseur (K302A) ; et
l'alimentation du second gaz craqué (152) à l'étage intermédiaire du second compresseur (K302B) pour une compression supplémentaire.

10. Appareil de production d'hydrogène à partir d'ammoniac, comprenant :
une pompe (P201) pour mettre sous pression de l'ammoniac liquide ;
au moins un échangeur de chaleur (E101) en communication fluidique avec la pompe (P102) pour chauffer (et éventuellement vaporiser) l'ammoniac liquide provenant de la pompe (P201) par échange de chaleur avec un ou plusieurs fluides chauds ;
un premier ensemble de tubes réacteurs contenant un catalyseur (8) en communication fluidique avec le ou les échangeurs de chaleur (E101), pour craquer l'ammoniac chauffé provenant du ou des échangeurs de chaleur (E101) afin de produire un premier gaz craqué contenant de l'hydrogène gazeux, de l'azote gazeux et de l'ammoniac résiduel ;
un four (10) en communication thermique avec le premier ensemble de tubes réacteurs contenant un catalyseur (8) pour la combustion d'un combustible afin de chauffer le premier ensemble de tubes réacteurs contenant un catalyseur (8) et de former un gaz de combustion ;
un premier dispositif PSA (26) en communication fluidique avec le premier ensemble de tubes réacteurs contenant un catalyseur (8) pour purifier le premier gaz craqué afin de produire un premier un gaz hydrogène produit et un premier gaz résiduaire de PSA ;
un réacteur de craquage secondaire (88) comprenant un catalyseur pour craquer le premier gaz résiduaire de PSA, ou un gaz dérivé de celui-ci, afin de produire un second gaz craqué comprenant de l'hydrogène gazeux et de l'azote gazeux ; et
un second dispositif de PSA (74) pour récupérer l'hydrogène à partir du second gaz craqué ou du premier gaz résiduaire de PSA afin de produire un second gaz hydrogène produit et un second gaz résiduaire de PSA, dans lequel l'appareil comprend une conduite de gaz de combustion (32) pour alimenter le gaz de combustion sous forme de fluide chaud depuis le four (10) vers le ou les échangeurs de chaleur (E101) et/ou une conduite de gaz craqué (12) pour alimenter le premier gaz craqué sous forme de fluide chaud depuis le premier ensemble de tubes réacteurs contenant un catalyseur (8) vers le ou les échangeurs de chaleur (E101).

11. Appareil selon la revendication 10, dans lequel l'appareil comprend un compresseur (K301) pour comprimer le premier gaz résiduaire de PSA en amont du réacteur de craquage secondaire (88), dans lequel l'appareil comprend éventuellement un compresseur multi-étages (K301A, K301B) comprenant :
un premier étage (K301A) pour comprimer le premier gaz résiduaire de PSA en amont du réacteur de craquage secondaire (88) ; et
un second étage (K301B) pour comprimer le second gaz craqué en aval du réacteur de craquage secondaire (88).

12. Appareil selon la revendication 10 ou la revendication 11, dans lequel le second dispositif de PSA (74) est en aval du compresseur (K301) et en amont du réacteur de craquage secondaire (88).

13. Appareil selon la revendication 10, dans lequel l'appareil comprend un compresseur (K301) pour comprimer le second gaz craqué en amont du second dispositif de PSA (74).

14. Appareil de production d'hydrogène à partir d'ammoniac, comprenant :
une pompe (P201) pour mettre sous pression de l'ammoniac liquide ;
au moins un échangeur de chaleur (E101) en communication fluidique avec la pompe (P102) pour chauffer (et éventuellement vaporiser) l'ammoniac liquide provenant de la pompe (P201) par échange de chaleur avec un ou plusieurs fluides chauds ;
un premier ensemble de tubes réacteurs contenant un catalyseur (8), en communication fluidique avec le ou les échangeurs de chaleur (E101), pour craquer l'ammoniac chauffé provenant du ou des échangeurs de chaleur (E101) afin de produire un premier gaz craqué contenant de l'hydrogène gazeux, de l'azote gazeux et de l'ammoniac résiduel ;
un four (10) en communication thermique avec le premier ensemble de tubes réacteurs contenant un catalyseur (8) pour la combustion d'un combustible afin de chauffer le premier ensemble de tubes réacteurs contenant un catalyseur (8) et de former un gaz de combustion ;
un premier dispositif PSA (26) en communication fluidique avec le premier ensemble de tubes réacteurs contenant un catalyseur (8) pour purifier le premier gaz craqué afin de produire un gaz hydrogène produit et un premier gaz résiduaire de PSA ;
un réacteur de craquage secondaire (88) comprenant un catalyseur pour craquer le premier gaz résiduaire de PSA, ou un gaz dérivé de celui-ci, afin de produire un second gaz craqué comprenant de l'hydrogène gazeux et de l'azote gazeux ; et
un séparateur à membrane (M301) pour séparer le premier gaz résiduaire de PSA afin de produire un rétentat gazeux riche en azote, et un perméat gazeux riche en hydrogène comprenant de l'ammoniac pour un traitement supplémentaire dans le réacteur de craquage secondaire (88), dans lequel l'appareil comprend une conduite de gaz de combustion (32) pour alimenter le gaz de combustion sous forme de fluide chaud depuis le four (10) vers le ou les échangeurs de chaleur (E101) et/ou une conduite de gaz craqué (12) pour alimenter le premier gaz craqué sous forme de fluide chaud depuis le premier ensemble de tubes réacteurs contenant un catalyseur (8) vers le ou les échangeurs de chaleur (E101).

15. Appareil selon la revendication 14, comprenant un premier compresseur (K301) pour comprimer le premier gaz résiduaire de PSA avant la séparation dans le séparateur à membrane.

16. Appareil selon la revendication 14 ou la revendication 15, comprenant un second compresseur (K302) pour comprimer le gaz riche en hydrogène.

17. Appareil selon la revendication 14 ou la revendication 15, dans lequel l'appareil comprend un compresseur multi-étages (K302A, K302B) comprenant :
un premier étage (K302A) pour comprimer le gaz riche en hydrogène en amont du réacteur de craquage secondaire (88) ; et
un second étage (K302B) pour comprimer le second gaz craqué en aval du réacteur de craquage secondaire (88).

18. Appareil selon la revendication 14 ou la revendication 15, comprenant un second compresseur (K302) pour comprimer le second gaz craqué.
